# EUROPEAN PATENT APPLICATION

(11) **EP 4 576 734 A1**
(43) Date of publication of application: **25.06.2025**
(21) Application number: 23862256.7
(22) Date of filing: 31.08.2023
(51) Int. Cl.: H04L 65/1016, H04L 67/141

(54) **COMMUNICATION METHOD, APPARATUS AND SYSTEM**

(30) Priority: 05.09.2022 CN 202211080962
(71) Applicant: Huawei Technologies Co., Ltd., Shenzhen, Guangdong 518129 (CN)
(72) Inventor: ZHANG, Shengwen, Shenzhen, Guangdong 518129 (CN); HU, Xiaokun, Shenzhen, Guangdong 518129 (CN)
(74) Representative: Gill Jennings & Every LLP
(86) International application number: PCT/CN2023/116012
(87) International publication number: WO 2024/051562

(57) **Abstract**

This application provides a communication method, apparatus, and system. The method may include: After obtaining an application information, a first terminal device sends the application information to a second terminal device in a same IMS call service, where the application information is information about a data channel application that is to be started or has been started by the first terminal device, the data channel application is used to transmit additional communication information through a data channel between the first terminal device and the second terminal device, the additional communication information is used to perform communication in addition to a voice call or a video call between the first terminal device and the second terminal device, and the application information includes an identifier of the data channel application. According to the foregoing solution, the terminal devices (namely, the first terminal device and the second terminal device) in the same IMS call service can perform communication in addition to the voice call or the video call by using same data channel applications.

## Description

### CROSS-REFERENCE TO RELATED APPLICATIONS

This application claims priority to Chinese Patent Application No. 202211080962.3, filed with the China National Intellectual Property Administration on September 5, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

An internet protocol (internet protocol, IP) multimedia subsystem (IP multimedia subsystem, IMS) is a network architecture for providing multimedia communication services.

In the IMS network architecture, a data channel application (data channel application, DC App) can provide a user with richer communication services in addition to a voice call or a video call. For example, the user may perform various communication such as screen sharing, location sharing, and augmented reality (augmented reality, AR) effect overlay by using the data channel application.

However, different IMS networks may provide different data channel applications (with different functions or different versions), and communication parties usually belong to the different IMS networks. How to enable the communication parties to perform communication in addition to the voice call or the video call by using the data channel applications that can communicate with each other is a problem that needs to be considered currently.

### SUMMARY

This application provides a communication method, apparatus, and system, so that different terminal devices in a same IMS call service can perform communication in addition to a voice call or a video call by using data channel applications that can communicate with each other.

According to a first aspect, a communication method is provided. The method may be performed by a first terminal device, or may be performed by a component (for example, a chip or a circuit) of the first terminal device. This is not limited herein. For ease of description, the following uses an example in which the first terminal device performs the method for description.

The communication method includes: The first terminal device obtains application information, where the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device. The first terminal device sends the application information to the second terminal device, where the application information includes an identifier of the data channel application.

In the foregoing solution, the first terminal device sends, to the terminal device (namely, the second terminal device) that is in the same IMS call service with the first terminal device, the information about the data channel application that is to be started or has been started, so that the second terminal device may be triggered to obtain the same data channel application. Therefore, the first terminal device and the second terminal device can perform communication in addition to the voice call or the video call by using the same data channel applications, thereby improving user experience.

In a possible implementation, the application information is used to trigger the second terminal device to obtain the data channel application.

With reference to the first aspect, in some implementations of the first aspect, the method further includes: The first terminal device obtains the data channel application by using a data channel server.

With reference to the first aspect, in some implementations of the first aspect, the information about the data channel application further includes information used to download the data channel application.

In a possible implementation, the information used to download the data channel application is used by the second terminal device to determine how to download the data channel application.

With reference to the first aspect, in some implementations of the first aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

Based on the foregoing solution, the second terminal device may determine, based on the information used to download the data channel application, how to download the data channel application, that is, determine a network from which the data channel application is downloaded, or a bootstrap data channel through which the data channel application is downloaded, so that the second terminal device can obtain the data channel application in time, and can perform communication with the first terminal device in addition to the voice call or the video call by using the data channel application.

With reference to the first aspect, in some implementations of the first aspect, that the first terminal device sends the information about the data channel application to the second terminal device includes: The first terminal device sends a session initiation protocol (session initiation protocol, SIP) re-invite (re-INVITE) request message to the second terminal device by using an application server, where the SIP re-INVITE request message includes the application information; or the first terminal device sends a SIP update (UPDATE) request message to the second terminal device by using an application server, where the SIP UPDATE request message includes the application information.

In a possible implementation, the SIP re-INVITE request message or the SIP UPDATE request message is used to negotiate media information for establishing the data channel between the first terminal device and the second terminal device.

Based on the foregoing solution, the first terminal device may send the application information to the second terminal device by using the SIP re-INVITE request message or the SIP UPDATE request message, without generating a new message to send the application information, thereby reducing signaling overheads.

With reference to the first aspect, in some implementations of the first aspect, that the first terminal device sends the application information to the second terminal device includes: The first terminal device sends a SIP information (INFO) request message to the second terminal device, where the SIP INFO request message includes the application information.

Based on the foregoing solution, the first terminal device may send the application information to the second terminal device by using the SIP INFO request message. In this case, after determining to start the data channel application, the first terminal device may immediately send the application information to the second terminal device by using the SIP INFO request message, thereby improving efficiency and reducing a delay.

With reference to the first aspect, in some implementations of the first aspect, the method further includes: The first terminal device determines to start the data channel application.

With reference to the first aspect, in some implementations of the first aspect, that the first terminal device determines to start the data channel application includes: The first terminal device detects that a user selects the data channel application.

With reference to the first aspect, in some implementations of the first aspect, the method further includes: The first terminal device receives indication information from the second terminal device, where the indication information indicates that the second terminal device successfully obtains the data channel application. The first terminal device establishes the data channel between the first terminal device and the second terminal device based on the indication information.

Based on the foregoing solution, the first terminal device may establish, with the second terminal device only when determining that the second terminal device successfully obtains the data channel application, the application data channel used to transmit data of the data channel application, thereby avoiding a resource waste caused by establishing the data channel when the second terminal device fails to obtain the data channel application.

With reference to the first aspect, in some implementations of the first aspect, the method further includes: The first terminal device sends a request message to the data channel server, where the request message includes the identifier of the data channel application, and the request message is for requesting to obtain the data channel application. The first terminal device receives the data channel application from the data channel server. The first terminal device performs communication in addition to the voice call or the video call with the second terminal device by using the data channel application.

Based on the foregoing solution, the first terminal device and the second terminal device can perform communication in addition to the voice call or the video call by using the same data channel applications, thereby improving user experience.

According to a second aspect, a communication method is provided. The method may be performed by a second terminal device, or may be performed by a component (for example, a chip or a circuit) of the second terminal device. This is not limited herein. For ease of description, the following uses an example in which the second terminal device performs the method for description.

The communication method includes: The second terminal device receives application information, where information about a data channel application includes an identifier of the data channel application, the data channel application is used to transmit additional communication information through a data channel between the second terminal device and a first terminal device that are in a same internet protocol multimedia subsystem IMS call service, and the additional communication information is used to perform communication in addition to a voice call or a video call between the first terminal device and the second terminal device. The second terminal device starts the data channel application based on the information about the data channel application.

It may be understood that transmitting the additional communication information includes sending and/or receiving the additional communication information.

It may be further understood that, in a possible implementation, the application information is information about the data channel application that is to be started or has been started by the first terminal device.

In the foregoing solution, the second terminal device may obtain the data channel application based on the received information about the data channel application. Therefore, the second terminal device can perform communication in addition to the voice call or the video call with the first terminal device based on the data channel application, to improve user experience.

With reference to the second aspect, in some implementations of the second aspect, the information about the data channel application further includes information used to download the data channel application.

In a possible implementation, the information used to download the data channel application is used by the second terminal device to determine how to download the data channel application.

Based on the foregoing solution, the second terminal device may determine, based on the information used to download the data channel application, how to download the data channel application, so that the second terminal device can obtain the data channel application in time, and can perform communication with the first terminal device in addition to the voice call or the video call by using the data channel application.

With reference to the second aspect, in some implementations of the second aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

With reference to the second aspect, in some implementations of the second aspect, the method further includes: The second terminal device determines a data channel server based on the information used to download the data channel application.

Based on the foregoing solution, the second terminal device may determine, based on the information used to download the data channel application, a data channel server from which the application is to be downloaded, thereby avoiding a case in which the data channel application fails to be downloaded because the second terminal device does not know where to download the data channel application.

With reference to the second aspect, in some implementations of the second aspect, that the second terminal device receives application information includes: The second terminal device receives a SIP re-INVITE request message from the first terminal device, where the SIP re-INVITE request message includes the application information. Alternatively, the second terminal device receives a SIP UPDATE request message from the first terminal device, where the UPDATE request message includes the application information.

In a possible implementation, the SIP re-INVITE request message or the SIP UPDATE request message is used to negotiate media information for establishing the data channel between the first terminal device and the second terminal device.

Based on the foregoing solution, the second terminal device may receive the application information by using the SIP re-INVITE request message or the SIP UPDATE request message, and does not need to receive the application information by using other additional messages, thereby reducing signaling overheads.

With reference to the second aspect, in some implementations of the second aspect, the second terminal device receives a SIP INFO request message from the first terminal device, where the SIP INFO request message includes the application information. Alternatively, the second terminal device receives a SIP INFO request message from an application server, where the SIP INFO request message includes the application information.

Based on the foregoing solution, the second terminal device may receive the application information by using the SIP INFO request message. The SIP INFO request message does not need to be reused in another procedure, thereby improving efficiency and reducing a delay.

With reference to the second aspect, in some implementations of the second aspect, the method further includes: The second terminal device receives the data channel application from the data channel server. The second terminal device sends indication information to the first terminal device, where the indication information indicates that the second terminal device successfully obtains the data channel application.

Based on the foregoing solution, when successfully obtaining the data channel application, the second terminal device may notify the first terminal device by using the indication information, to avoid a resource waste caused when the second terminal device fails to obtain the data channel application but the first terminal device establishes the data channel.

According to a third aspect, a communication method is provided. The method may be performed by an application server, or may be performed by a component (for example, a chip or a circuit) of the application server. This is not limited herein. For ease of description, the following uses an example in which the application server performs the method for description.

The communication method includes: The application server receives an identifier of a data channel application and an identifier of a second terminal device that are from a data channel server, where the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device. The application server sends application information to the second terminal device based on the identifier of the second terminal device, where the application information includes the identifier of the data channel application.

It may be further understood that, in a possible implementation, the application information is information about the data channel application that is to be started or has been started by the first terminal device.

Based on the foregoing solution, the application server may send, to the second terminal device based on an indication of the data channel server, the application information used to perform communication in addition to the voice call or the video call between the first terminal device and the second terminal device, so that the second terminal device may obtain the data channel application based on the application information, and can perform communication in addition to the voice call or the video call with the first terminal device by using the data channel application, thereby improving user experience.

With reference to the third aspect, in some implementations of the third aspect, the information about the data channel application further includes information used to download the data channel application.

In a possible implementation, the information used to download the data channel application is used by the second terminal device to determine how to download the data channel application.

With reference to the third aspect, in some implementations of the third aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

Based on the foregoing solution, the second terminal device may determine, based on the information used to download the data channel application, how to download the data channel application, that is, determine a network from which the data channel application is downloaded, or a bootstrap data channel through which the data channel application is downloaded, so that the second terminal device can obtain the data channel application in time, and can perform communication with the first terminal device in addition to the voice call or the video call by using the data channel application.

With reference to the third aspect, in some implementations of the third aspect, that the application server sends application information to the second terminal device based on the identifier of the second terminal device includes: The application server sends a session initiation protocol information SIP INFO request message to the second terminal device based on the identifier of the second terminal device, where the SIP INFO request message includes the application information.

According to a fourth aspect, a communication method is provided. The method may be performed by a data channel server, or may be performed by a component (for example, a chip or a circuit) of the data channel server. This is not limited herein. For ease of description, the following uses an example in which the data channel server performs the method for description.

The communication method includes: The data channel server receives a request message from a first terminal device, where the request message includes an identifier of a data channel application, the request message is for requesting to obtain the data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device. The data channel server sends the identifier of the data channel application and an identifier of the second terminal device to an application server.

Based on the foregoing solution, in a procedure in which the first terminal device requests the data channel server to obtain the data channel application used to perform communication with the second terminal device in addition to the voice call or the video call, the data channel application may send the identifier of the data channel application and the identifier of the second terminal device to the application server. Therefore, the application server can send, to the second terminal device, the application information corresponding to the data channel application, so that the second terminal device can obtain the data channel application based on the application information, and perform communication in addition to the voice call or the video call with the first terminal device by using the data channel application, thereby improving user experience.

With reference to the fourth aspect, in some implementations of the fourth aspect, before that the data channel server sends the identifier of the data channel application and an identifier of the second terminal device to an application server, the method further includes: The data channel server determines that a peer device that is in the same IMS call service with the first terminal device is the second terminal device.

According to a fifth aspect, a communication method is provided. The method may be performed by a first terminal device, or may be performed by a component (for example, a chip or a circuit) of the first terminal device. This is not limited herein. For ease of description, the following uses an example in which the first terminal device performs the method for description.

The communication method includes: The first terminal device obtains application information, where the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device. The first terminal device triggers the second terminal device to obtain the data channel application.

It may be understood that the first terminal device in the fifth aspect may alternatively perform the method performed by the first terminal device in the first aspect. For specific beneficial effects, refer to descriptions of the first aspect. Details are not described herein again.

According to a sixth aspect, a communication method is provided. The method may be performed by an application server, or may be performed by a component (for example, a chip or a circuit) of the application server. This is not limited herein. For ease of description, the following uses an example in which the application server performs the method for description.

The communication method includes: The application server receives an identifier of a data channel application and an identifier of a second terminal device that are from a data channel server, where the data channel application is used to transmit additional communication information through a data channel between the second terminal device and a first terminal device that are in a same internet protocol multimedia subsystem IMS call service, and the additional communication information is used to perform communication in addition to a voice call or a video call between the first terminal device and the second terminal device. The application server triggers, based on the identifier of the second terminal device, the second terminal device to obtain the data channel application.

It may be understood that the application server in the sixth aspect may alternatively perform the method performed by the application server in the third aspect. For specific beneficial effects, refer to descriptions of the third aspect. Details are not described herein again.

According to a seventh aspect, a communication method is provided. The method may be performed by a first terminal device and a second terminal device, or may be performed by a component (for example, a chip or a circuit) of the first terminal device and the second terminal device. This is not limited herein. For ease of description, the following uses an example in which the first terminal device and the second terminal device perform the method for description.

The communication method includes: The first terminal device obtains application information, where the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device. The first terminal device sends the application information to the second terminal device, where the application information includes an identifier of the data channel application. The second terminal device receives the application information from the first terminal device. The second terminal device starts the data channel application based on the application information.

With reference to the seventh aspect, in some implementations of the seventh aspect, the application information further includes information used to download the data channel application.

With reference to the seventh aspect, in some implementations of the seventh aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

With reference to the seventh aspect, in some implementations of the seventh aspect, that the first terminal device sends the application information to the second terminal device includes: The first terminal device sends a session initiation protocol re-invite SIP re-INVITE request message to the second terminal device by using an application server, where the SIP re-INVITE request message includes the application information. That the second terminal device receives the application information includes: The second terminal device receives the SIP re-INVITE request message from the first terminal device.

With reference to the seventh aspect, in some implementations of the seventh aspect, that the first terminal device sends the application information to the second terminal device includes: The first terminal device sends a session initiation protocol information update SIP UPDATE request message to the second terminal device by using an application server, where the SIP UPDATE request message includes the application information. That the second terminal device receives the application information includes: The second terminal device receives the SIP UPDATE request message from the first terminal device.

With reference to the seventh aspect, in some implementations of the seventh aspect, that the first terminal device sends the application information to the second terminal device includes: The first terminal device sends a session initiation protocol information SIP INFO request message to the second terminal device, where the SIP INFO request message includes the application information. That the second terminal device receives the application information includes: The second terminal device receives the SIP INFO request message from the first terminal device.

With reference to the seventh aspect, in some implementations of the seventh aspect, the method further includes: The first terminal device determines to start the data channel application.

With reference to the seventh aspect, in some implementations of the seventh aspect, that the first terminal device determines to start the data channel application includes: The first terminal device detects that a user selects the data channel application.

With reference to the seventh aspect, in some implementations of the seventh aspect, the method further includes: The second terminal device receives the data channel application from a data channel server. The second terminal device sends indication information to the first terminal device, where the indication information indicates that the second terminal device successfully obtains the data channel application. The first terminal device receives the indication information from the second terminal device. The first terminal device establishes the data channel between the first terminal device and the second terminal device based on the indication information.

It may be understood that, for beneficial effects of the solution performed by the first terminal device in the seventh aspect, refer to related descriptions in the first aspect. For beneficial effects of the solution performed by the second terminal device in the seventh aspect, refer to related descriptions in the second aspect. Details are not described herein again.

According to an eighth aspect, a communication method is provided. The method may be performed by a data channel server and an application server, or may be performed by a component (for example, a chip or a circuit) of the data channel server and the application server. This is not limited herein. For ease of description, the following uses an example in which the data channel server and the application server perform the method for description.

The communication method includes: The data channel server receives a request message from a first terminal device, where the request message includes an identifier of a data channel application, the request message is for requesting to obtain the data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device. The data channel server sends the identifier of the data channel application and an identifier of the second terminal device to an application server. The application server receives the identifier of the data channel application and the identifier of the second terminal device that are from the data channel server. The application server sends application information to the second terminal device based on the identifier of the second terminal device, where the application information includes the identifier of the data channel application.

With reference to the eighth aspect, in some implementations of the eighth aspect, the method further includes: The second terminal device receives information about the data channel application from the application server. The second terminal device starts the data channel application based on the information about the data channel application.

With reference to the eighth aspect, in some implementations of the eighth aspect, the application information further includes information used to download the data channel application.

With reference to the eighth aspect, in some implementations of the eighth aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

With reference to the eighth aspect, in some implementations of the eighth aspect, the method further includes: The data channel server determines that a peer device that is in the same IMS call service with the first terminal device is the second terminal device.

It may be understood that, for beneficial effects of the solution performed by the data channel server in the eighth aspect, refer to related descriptions in the fourth aspect. For beneficial effects of the solution performed by the application server in the eighth aspect, refer to related descriptions in the third aspect. Details are not described herein again.

According to a ninth aspect, a communication method is provided. The method may be performed by a second terminal device and a data channel server, or may be performed by a component (for example, a chip or a circuit) of the second terminal device and the data channel server. This is not limited herein. For ease of description, the following uses an example in which the second terminal device and the data channel server perform the method for description.

The communication method includes: The second terminal device receives application information, where the application information includes an identifier of a data channel application, the data channel application is used to transmit additional communication information through a data channel between the second terminal device and a first terminal device that are in a same internet protocol multimedia subsystem IMS call service, and the additional communication information is used to perform communication in addition to a voice call or a video call between the first terminal device and the second terminal device. The second terminal device starts the data channel application based on information about the data channel application.

With reference to the ninth aspect, in some implementations of the ninth aspect, the information about the data channel application further includes information used to download the data channel application.

With reference to the ninth aspect, in some implementations of the ninth aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

With reference to the ninth aspect, in some implementations of the ninth aspect, the method further includes: The second terminal device determines the data channel server based on the information used to download the data channel application.

With reference to the ninth aspect, in some implementations of the ninth aspect, the method further includes: The data channel server sends the data channel application to the second terminal device. The second terminal device receives the data channel application from the data channel server. The second terminal device sends indication information to the first terminal device, where the indication information indicates that the second terminal device successfully obtains the data channel application.

It may be understood that, for beneficial effects of the solution performed by the second terminal device in the ninth aspect, refer to related descriptions in the second aspect.

According to a tenth aspect, a communication method is provided. The method may be performed by a first terminal device, a data channel server, an application server, and a second terminal device, or may be performed by a component (for example, a chip or a circuit) of the foregoing devices. This is not limited herein. For ease of description, the following uses an example in which the first terminal device, the data channel server, the application server, and the second terminal device perform the method for description.

The communication method includes: The first terminal device sends a request message to the data channel server, where the request message includes an identifier of a data channel application, the request message is for requesting to obtain the data channel application, the data channel application is used to transmit additional communication information through a data channel between the first terminal device and the second terminal device that are in a same internet protocol multimedia subsystem IMS call service, and the additional communication information is used to perform communication in addition to a voice call or a video call between the first terminal device and the second terminal device. The data channel server receives the request message from the first terminal device. The data channel server sends the identifier of the data channel application and an identifier of the second terminal device to the application server. The application server receives the identifier of the data channel application and the identifier of the second terminal device that are from the data channel server. The application server sends application information to the second terminal device based on the identifier of the second terminal device, where the application information includes the identifier of the data channel application. The second terminal device receives the application information from the application server. The second terminal device starts the data channel application based on the application information.

With reference to the tenth aspect, in some implementations of the tenth aspect, the application information further includes information used to download the data channel application.

With reference to the tenth aspect, in some implementations of the tenth aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

With reference to the tenth aspect, in some implementations of the tenth aspect, the method further includes: The data channel server determines that a peer device that is in the same IMS call service with the first terminal device is the second terminal device.

It may be understood that, for beneficial effects of the solution performed by the data channel server in the tenth aspect, refer to related descriptions in the fourth aspect. For beneficial effects of the solution performed by the application server in the tenth aspect, refer to related descriptions in the third aspect. For beneficial effects of the solution performed by the second terminal device in the tenth aspect, refer to related descriptions in the second aspect. Details are not described herein again.

According to an eleventh aspect, a first terminal device is provided. The first terminal device includes: a processing module, configured to obtain application information, where the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device; and a transceiver module, configured to send the application information to the second terminal device, where the application information includes an identifier of the data channel application.

With reference to the eleventh aspect, in some implementations of the eleventh aspect, the application information further includes information used to download the data channel application.

With reference to the eleventh aspect, in some implementations of the eleventh aspect, the information used to download the data channel application includes one or more of the following: information indicating a network to which the data channel application belongs, a stream identifier that is of a bootstrap data channel and that is used by the apparatus to download the data channel application, or a stream identifier that is of a bootstrap data channel and that is used by the second terminal device to download the data channel application.

With reference to the eleventh aspect, in some implementations of the eleventh aspect, the transceiver module is specifically configured to send a session initiation protocol re-invite SIP re-INVITE request message to the second terminal device by using an application server, where the SIP re-INVITE request message includes the application information; or the transceiver module is specifically configured to send a session initiation protocol information update SIP UPDATE request message to the second terminal device by using an application server, where the SIP UPDATE request message includes the application information.

With reference to the eleventh aspect, in some implementations of the eleventh aspect, the transceiver module is specifically configured to send a session initiation protocol information SIP INFO request message to the second terminal device, where the SIP INFO request message includes the application information.

With reference to the eleventh aspect, in some implementations of the eleventh aspect, the processing module is further configured to determine to start the data channel application.

With reference to the eleventh aspect, in some implementations of the eleventh aspect, the transceiver module is further configured to receive indication information from the second terminal device, where the indication information indicates that the second terminal device successfully obtains the data channel application; and the processing module is further configured to establish the data channel with the second terminal device based on the indication information.

According to a twelfth aspect, a second terminal device is provided. The second terminal device includes: a transceiver module, configured to receive application information, where the application information is information about a data channel application that is to be started or has been started by the first terminal device, the application information includes an identifier of the data channel application, the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device; and a processing module, configured to start the data channel application based on the application information.

With reference to the twelfth aspect, in some implementations of the twelfth aspect, the information about the data channel application further includes information used to download the data channel application.

With reference to the twelfth aspect, in some implementations of the twelfth aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the apparatus to download the data channel application.

With reference to the twelfth aspect, in some implementations of the twelfth aspect, the apparatus further includes: the second terminal device determines a data channel server based on the information used to download the data channel application. The second terminal device requests to obtain the data channel application from the data channel server.

With reference to the twelfth aspect, in some implementations of the twelfth aspect, the transceiver module is specifically configured to receive a SIP re-INVITE request message from the first terminal device, where the re-INVITE request message includes the application information; the transceiver module is specifically configured to receive a SIP UPDATE request message from the first terminal device, where the UPDATE request message includes the application information; the transceiver module is specifically configured to receive a SIP INFO request message from the first terminal device, where the SIP INFO request message includes the application information; or the transceiver module is specifically configured to receive a SIP INFO request message from an application server, where the SIP INFO request message includes the application information.

With reference to the twelfth aspect, in some implementations of the twelfth aspect, the transceiver module is further configured to: receive the data channel application from the data channel server; and send indication information to the first terminal device, where the indication information indicates that the second terminal device successfully obtains the data channel application.

According to a thirteenth aspect, a communication apparatus is provided. The communication apparatus includes: a transceiver module, configured to receive an identifier of a data channel application and an identifier of a second terminal device that are from a data channel server, where the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device; and a processing module, configured to send application information to the second terminal device based on the identifier of the second terminal device, where the application information includes the identifier of the data channel application.

With reference to the thirteenth aspect, in some implementations of the thirteenth aspect, the application information further includes information used to download the data channel application.

With reference to the thirteenth aspect, in some implementations of the thirteenth aspect, the information used to download the data channel application includes one or more of the following: information indicating a network to which the data channel application belongs, a stream identifier that is of a bootstrap data channel and that is used by the first terminal device to download the data channel application, or a stream identifier that is of a bootstrap data channel and that is used by the second terminal device to download the data channel application.

According to a fourteenth aspect, a communication apparatus is provided. The communication apparatus includes: a transceiver module, configured to receive a request message from a first terminal device, where the request message includes an identifier of a data channel application, the request message is for requesting to obtain the data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device; and send the identifier of the data channel application and an identifier of the second terminal device to an application server.

With reference to the fourteenth aspect, in some implementations of the fourteenth aspect, the apparatus further includes: a processing module, where the processing module is configured to determine that a peer device that is in the same IMS call service with the first terminal device is the second terminal device.

According to a fifteenth aspect, this application provides: a processor, configured to perform the method provided in any one of the first aspect to the fourth aspect. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the foregoing information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

According to the foregoing principle, for example, receiving the request message in the foregoing methods may be understood as receiving the input information by the processor.

Unless otherwise specified, operations such as transmitting, sending, and obtaining/receiving related to the processor may be more usually understood as operations such as outputting, receiving, and inputting of the processor if the operations do not conflict with actual functions or internal logic of the operations in related descriptions, instead of operations such as transmitting, sending, and receiving directly performed by a radio frequency circuit and an antenna.

In an implementation process, the processor may be a processor specially configured to perform these methods, or may be a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a sixteenth aspect, a computer-readable storage medium is provided. The computer-readable storage medium stores program code to be executed by a device, and the program code is used to perform any one of the methods provided in the first aspect to the fourth aspect.

According to a seventeenth aspect, a computer program product including instructions is provided. When the computer program product runs on a computer, the computer is enabled to perform any one of the methods provided in the first aspect to the fourth aspect.

According to an eighteenth aspect, a chip is provided. The chip includes a processor and a communication interface. The processor reads, through the communication interface, instructions stored in a memory, to perform any one of the methods provided in the first aspect to the fourth aspect.

Optionally, in an implementation, the chip may further include the memory, the memory stores the instructions, the processor is configured to execute the instructions stored in the memory, and when the instructions are executed, the processor is configured to perform any one of the methods provided in the first aspect to the fourth aspect.

According to a nineteenth aspect, a communication system is provided. The communication system includes a first terminal device configured to perform the method shown in the first aspect, and a second terminal device configured to perform the method shown in the second aspect.

According to a twentieth aspect, a communication system is provided. The communication system includes a data channel server configured to perform the method shown in the fourth aspect, and an application server configured to perform the method shown in the third aspect.

Optionally, the communication system further includes a second terminal device configured to perform the method shown in the second aspect.

### BRIEF DESCRIPTION OF DRAWINGS

FIG. 1 is a diagram of a network architecture applicable to an embodiment of this application;
FIG. 2 is a diagram of another network architecture applicable to an embodiment of this application;
FIG. 3 is a diagram of a data channel protocol stack applicable to an embodiment of this application;
FIG. 4 is a flowchart of obtaining a data channel application according to an embodiment of this application;
FIG. 5 is an example flowchart of a communication method 500 according to an embodiment of this application;
FIG. 6A, FIG. 6B, and FIG. 6C are an example flowchart of another communication method 600 according to an embodiment of this application;
FIG. 7A, FIG. 7B, and FIG. 7C are an example flowchart of still another communication method 700 according to an embodiment of this application;
FIG. 8A, FIG. 8B, and FIG. 8C are an example flowchart of still another communication method 800 according to an embodiment of this application;
FIG. 9 is a block diagram of a communication apparatus according to an embodiment of this application;
FIG. 10 is a block diagram of a communication apparatus according to another embodiment of this application; and
FIG. 11 is a block diagram of a communication apparatus according to still another embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, in this application, various numeric numbers are distinguished merely for ease of description, and are not used to limit the scope of this application. The sequence numbers of the foregoing processes do not mean execution sequences, and the execution sequences of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that, data termed in such a way is interchangeable in appropriate circumstances, so that embodiments described herein can be implemented in a sequence other than the sequence illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

The technical solutions provided in this application may be applied to various communication systems, for example, a 5th generation (5th generation, 5G) communication system (or referred to as a new radio (new radio, NR) system), a 4th generation (4th generation, 4G) communication system (or referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

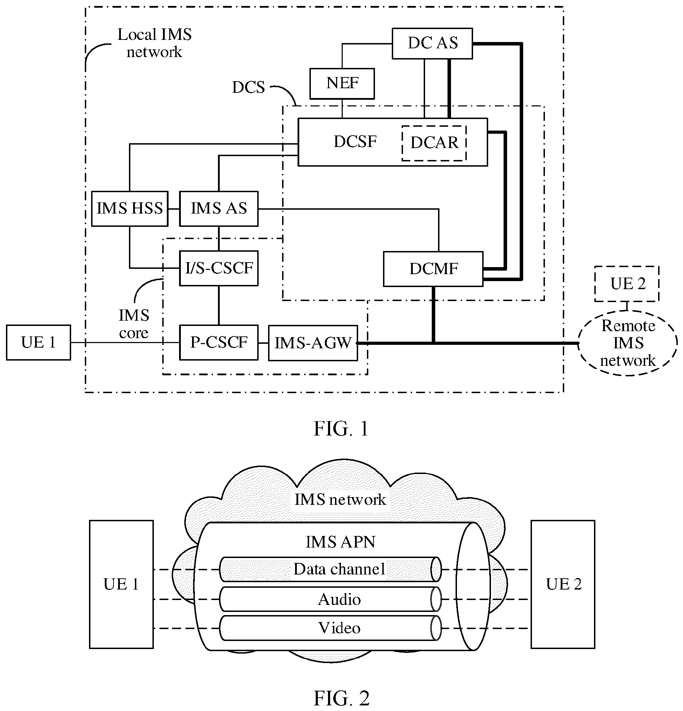

A communication system 100 applicable to an embodiment of this application is described below by using examples and with reference to FIG. 1. It should be understood that the communication system described in this application is merely an example, and should not constitute any limitation on this application. The following briefly describes network elements (or referred to as a functional network element, a functional entity, a node, a device, or the like) shown in FIG. 1.
1. User equipment (user equipment, UE): The UE may be any device that can access a network, and may also be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides a voice/data connectivity for a user, for example, a handheld device or a vehicle-mounted device that has a wireless connection function. Currently, some examples of the terminal may be: a mobile phone (mobile phone), a tablet computer (pad), a computer having a wireless sending/receiving function (for example, a notebook computer or a palmtop computer), a mobile internet device (mobile internet device, MID), a virtual reality (virtual reality, VR) device, an AR device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or computing device having a wireless communication function, another processing device connected to a wireless modem, a vehicle-mounted device, a wearable device, a terminal device in a 4G/5G network, a terminal device in a future evolved public land mobile communication network (public land mobile network, PLMN), and the like.

In addition, the UE may alternatively be UE in an internet of things (Internet of things, IoT) system. IoT is an important part in future development of information technologies. A main technical feature of IoT is to connect things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

In addition, the UE may alternatively include an intelligent printer, a train detector, and the like, and main functions of the terminal device include: collecting data (which is a function of some terminal devices), receiving control information and downlink data of a network device, sending an electromagnetic wave, and transmitting uplink data to the network device.

Optionally, the UE may serve as a base station. For example, the user equipment may serve as a scheduling entity that provides a sidelink signal between user equipment in vehicle-to-everything (vehicle-to-everything, V2X), device-to-device (device-to-device, D2D), or the like. For example, a cellular phone and a car communicate with each other by using a sidelink signal. The cellular phone communicates with a smart home device without relaying a communication signal via a base station.

In network architectures provided in embodiments of this application, different UE may perform an IMS call through IMS networks. For example, UE 1 and UE 2 in FIG. 1 may perform an IMS call through IMS networks. The UE 2 may be referred to as a peer device that performs the IMS call with the UE 1. Similarly, the UE 1 may be referred to as a peer device that performs the IMS call with the UE 2. It is assumed that the UE 1 is a device that initiates the call. For the UE 1, the IMS network serving the UE 1 may be referred to as a local IMS (Local IMS) network, and the IMS network serving the UE 2 may be referred to as a remote IMS (Remote IMS) network. It may be understood that a network element architecture inside the remote IMS network is similar to a network element architecture inside the local IMS network. For brevity, the network element architecture inside the remote IMS network is not shown in the figure.

2. Call session control function (call session control function, CSCF) network element: A CSCF is a functional entity inside an IMS, and is a core of the entire IMS. The CSCF is mainly responsible for processing signaling control in a multimedia call session process. The CSCF manages user authentication of the IMS and quality of service (quality of service, QoS) on an IMS bearer-plane, cooperates with another network element to perform control on a session initiation protocol (session initiation protocol, SIP) session, service negotiation, resource allocation, and the like. For ease of description, the CSCF network element in this application is referred to as the "CSCF".

The CSCF may communicate with the terminal device, and the CSCF may communicate with a gateway device. For example, the CSCF may select the gateway device that communicates with the terminal device. In addition, the CSCF may allocate routing information, for example, an IP address or a port, to the terminal device and the gateway device.

By way of example, and not limitation, the CSCF is classified into a proxy-CSCF (proxy-CSCF, P-CSCF), an interrogating-CSCF (interrogating-CSCF, I-CSCF), a serving-CSCF (serving-CSCF, S-CSCF), and the like based on functions.

The P-CSCF is an entry node for a user to access the IMS network, and is mainly responsible for forwarding SIP signaling between the IMS user and a home network. The I-CSCF is a unified entry point for the IMS user to the home network, and is responsible for allocating or querying the S-CSCF that serves the user. The S-CSCF is a unified entry point for the IMS user to the home network, and is responsible for allocating or querying the S-CSCF that serves the user.

It may be understood that the P-CSCF, the S-CSCF, and the I-CSCF may be independently disposed in different entities, or may be integrated into a same entity. This is not limited in this application.

3. IMS access media gateway (access media gateway, AGW): The IMS AGW may provide functions of an IMS network access gateway and media gateway.

It may be understood that the CSCF and the IMS AGW may be collectively referred to as an IMS core. A manner of signaling interaction between network elements in the IMS core is not limited in this application.

4. Data channel server (data channel server, DCS): The DCS can be classified into two logical functional entities: a data channel signaling function (data channel signaling function, DCSF) network element and a data channel media function (data channel media function, DCMF) network element. The DCMF network element is configured to provide a data channel media resource management function, and the DCSF network element is configured to provide a data channel signaling control function.

It may be understood that in actual network deployment, the DCSF network element and the DCMF network element may be integrated (referred to as the DCS in this case), or may be separated. This is not limited in this application.

5. Data data channel application repository (data channel application repository, DCAR): The DCAR is a repository used to store a data channel application (data channel application, DC App).

After a developer completes development of a DC App, the developer uploads the DC App to a DCS of a carrier, and the DCS then stores the DC App in the DCAR. The DCS downloads the DC App from the DCAR to a local when necessary, for subsequent processing.

6. Home subscriber server (home subscriber server, HSS): The HSS serves as a database for storing user information in the IMS, and the user stores user data. By way of example, and not limitation, the user data may include information that is about a data channel service and that is subscribed to by the user and the carrier to use.

7. IMS application server (application server, AS): The IMS AS is an application layer device at a top layer of the IMS system, and provides basic services and supplementary services, for example, a multimedia conference, convergent communication, a short message service gateway, and a standard attendant console. The IMS network is an IP bearer-based open system that provides various multimedia services for the user. The IMS AS interacts with the CSCF to trigger and execute various network services. In addition, the terminal device is communicatively connected to the IMS AS. The IMS AS may establish a data channel for the terminal device.

8. Data channel application server (data channel application server, DC AS): The DC AS provides data channel service logic.

9. Network exposure function (network exposure function, NEF) network element: The NEF network element is configured to securely open various services in a 5GC network to a third party.

It may be understood that the network architecture applicable to embodiments of this application is merely an example, and the network architecture applicable to embodiments of this application is not limited thereto. Any network architecture that can implement functions of the foregoing network elements is applicable to embodiments of this application. That is, the network architecture and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

It may be further understood that the network elements or devices listed in the foregoing network architecture are merely examples for description, and the network architecture applicable to this application may further include another network element or device. This is not limited in this application.

It may be further understood that names of the foregoing network elements or devices are defined only for ease of distinguishing between different functions, and should not constitute any limitation on this application. This application does not exclude a possibility of using other names in the 4G network, the 5G network, and another future network. For example, in a 6G network, some or all of the foregoing network elements may still use terms in 4G/5G, may use other names.

In embodiments of this application, a communication device (for example, the terminal device, the CSCF device, or the AS device) includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (Process), such as a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

In addition, aspects or features in embodiments of this application may be implemented as a method, an apparatus, or a product that uses standard programming and/or engineering technologies. The term "product" used in this application covers a computer program that can be accessed from any computer-readable device, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), or a smart card and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry an instruction and/or data.

To facilitate understanding of the technical solutions in embodiments of this application, before the solutions in embodiments of this application are described, some terms or concepts that may be used in embodiments of this application are first described.

### 1. IMS call service

The IMS call service in embodiments of this application is a service in which the terminal device, as a calling identity or a called identity, continuously participates in a voice call or a video call with one or more other terminal devices via a network element in the IMS.

The IMS call service may cover an entire process from a start of dialing to an end of the call, or may cover a part of the process from the start of the dialing to the end of the call, for example, a process from parties that participate in the IMS call service entering a call state to the end of the call.

The IMS call service may be in a one-to-one form, or may be in a one-to-many (for example, a conference) form. In embodiments of this application, the one-to-one form is used as an example, but all related solutions may be used in the one-to-many form.

In embodiments of this application, "a first terminal device and a second terminal device are in a same IMS call service" means that both the first terminal device and the second terminal device are participants in the same IMS call service. The first terminal device is calling party user equipment, and the second terminal device is called party user equipment; or the first terminal device is called party user equipment, and the second terminal device is calling party user equipment. When the IMS call service is in the one-to-many form, both the first terminal device and the second terminal device may be called party user equipment.

### 2. Audio/video interaction content

The audio/video interaction content in embodiments of this application is audio content transmitted in real time between the participant user equipment in the IMS call service to implement voice interaction, or audio content and/or video content transmitted in real time between the participant user equipment in a video call service to implement video interaction.

### 3. Additional communication information

The additional communication information described in embodiments of this application is used to perform communication in addition to a voice call or a video call between participant devices in the IMS call service, or the additional communication information is information used to perform communication between the participant devices in the IMS call service in addition to the audio/video interaction content.

In an example, the additional communication information may include at least one of the following: content shot by a camera of user equipment, information generated by a thumbs-up (thumbs-up), information generated by sending a red packet, desktop sharing content, a mark drawn by a user on a screen, a text message input by the user, picture information input by the user, geographical location information, video content in a video file, or the like. The information may be produced or consumed by any device of a calling terminal device or a called terminal device, or may be produced or consumed by a device connected to the calling terminal device or the called terminal device.

In embodiments of this application, the additional communication information may be transmitted (sent or received) by a data channel application on a participant terminal device in the IMS call service through a data channel, and corresponding processing (presentation, control, and the like) is performed.

### 4. Data channel

The data channel in embodiments of this application is also referred to as an IMS data channel (IMS data channel), namely, a data channel in the IMS, and may be used to transmit data according to a stream control transmission protocol (stream control transmission protocol, SCTP). That is, the data channel is a logical channel or a data connection for transmitting data according to the SCTP.

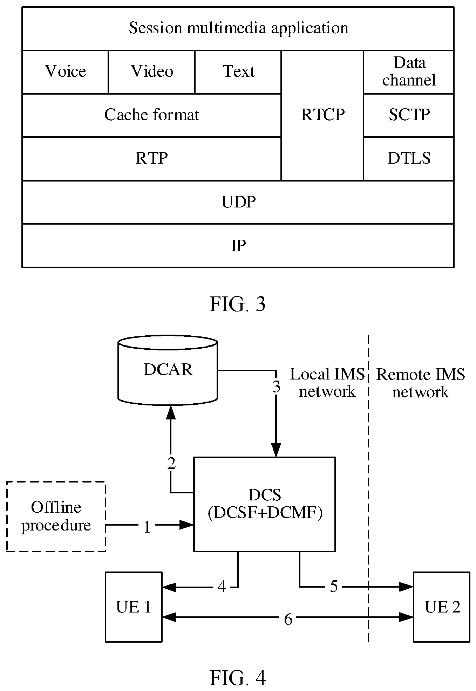

For example, the DC provides the user with richer real-time interaction services in addition to an audio/video call and a text. For example, terminal devices (for example, UE 1 and UE 2 in FIG. 2) in a same IMS call service determine, through a SIP/session description protocol (session description protocol, SDP) media negotiation process in the IMS, an IP address and a port used by the two terminal devices to transmit data, key information needed for establishing a datagram transport layer security (datagram transport layer security, DTLS) association and a stream control transmission protocol (stream control transmission protocol, SCTP) association, and media information corresponding to a data channel, to establish one or more data channels (for example, a data channel shown in FIG. 2 or FIG. 3) for parallel transmission with speech (Speech), a video (Video), and a text (Text) in an IMS session. FIG. 3 is a diagram of a data channel protocol stack according to an SCTP/DTLS/user datagram protocol (user datagram protocol, UDP)/IP. The UE 1 and the UE 2 may download various applications (namely, DC Apps) from a network side DCS through the data channel, and run these applications before, during, or after an audio/video call. Application data of various types of these applications is transmitted through the data channel, so that the UE 1 and the UE 2 can perform communication in addition to a voice call or a video call, for example, screen sharing (screen sharing), simultaneous translation (simultaneous translation), location sharing, AR effect overlay, and even synchronous immersive interaction of hearing, vision, and touch, and the like, to improve user experience.

The data channels may be classified into two types based on different usages: a bootstrap data channel (bootstrap data channel, BDC) and an application data channel (application data channel, ADC).

The BDC is used by the terminal device to obtain the DC App from the DCS.

A terminal device supporting a data channel capability may establish a BDC with a DCS in a call originating network and/or a DCS in a call terminating network. A specific manner depends on whether the networks support the data channel capability and service subscription of the communication terminal devices in the networks.

In addition, the BDC can be only for transferring data over a hypertext transfer protocol (hypertext transfer protocol, HTTP), and a value of a stream ID of the BDC is less than 1000.

The ADC is used to transmit interaction data generated by the DC Apps running on the two communication parties. In a P2P scenario, the ADC is established between the calling and called terminal devices. In this case, the ADC is used to transmit interaction data generated by the DC Apps running on the communication terminal devices.

In addition, the ADC can transmit data over any protocol. A value of a stream ID of the ADC is greater than or equal to 1000.

### 5. Data channel application

The data channel application in embodiments of this application is used to transmit additional communication information through a data channel between a plurality of terminal devices in a same IMS call service. In an example, the data channel application is network (Web) content including a hypertext markup language (hypertext markup language, HTML), a JavaScript script and a picture, and cascading style sheets (cascading style sheets, CSS), describes a graphical user interface (user interface, UI), and can implement interactive service logic.

The data channel application is usually downloaded from a network side by a call application on the terminal device, runs during an IMS call, and does not need to be installed or uninstalled. It may be understood that the data channel application may exist in a form of a web page, or may exist in a form of an applet, a quick app, a light app, or the like. This is not limited in this application.

For example, the data channel application in embodiments of this application may be a DC App in a 4G/5G network. The DC App can transfer various data such as texts, images, locations, and files before and after an IMS call is established, to implement communication between two communication parties in addition to a voice call or a video call, thereby greatly improving experience of the two communication parties.

The terminal device may obtain the DC App from a DCS through a BDC in an HTTP procedure, may automatically or interactively update the DC App at any time, and then performs communication in the voice call or the video call with a peer terminal device by using the DC App. For example, the first terminal device and the second terminal device are in the same IMS call service. Assuming that the first terminal device intends to share a mobile phone screen of the first terminal device with the second terminal device in a call process with the second terminal device, to indicate B to perform a mobile phone setting, the first terminal device and the second terminal device may first respectively obtain DC Apps used for the screen sharing, and then separately run the DC App to perform communication in addition to the voice call or the video call with peer UE. With reference to a flowchart shown in FIG. 4, the following briefly describes a procedure in which a terminal device obtains a DC App. In an example provided in FIG. 4, an example in which UE 1 and UE 2 are respectively calling user equipment and called user equipment is used for description.
1. A developer completes development of the DC App through an offline procedure, and uploads the developed DC App to a DCS of a carrier.
2. The DCS stores the DC App in the DCAR.
3. The DCS downloads the DC App from the DCAR when necessary.
4. The UE 1 establishes a BDC with the DCS, and obtains the needed DC App from the DCS through the BDC.
5. The UE 2 establishes a BDC with the DCS, and obtains the needed DC App from the DCS through the BDC.
6. An ADC is established between the UE 1 and the UE 2, to transmit interaction data of the DC App.

### 6. Bootstrap application (bootstrap application)

The bootstrap application is an application list that includes all DC Apps available to a user. Therefore, the bootstrap application may also be referred to as a data channel application list. The user can tap a DC App displayed on the bootstrap application on a screen of UE, to trigger the UE to obtain the DC App from a DCS and run the DC App.

### 7. Media information and media negotiation

The media information in embodiments of this application is information related to media resources for an IMS call, for example, an IP address, port information, a TLS ID, a certificate, and a stream identifier (stream ID) of a DC. Therefore, the media information in embodiments of this application may also be referred to as media resource information.

Both UE (for example, the UE 1 and the UE 2 in FIG. 2) that perform the IMS call may obtain, through the media negotiation, media information for establishing the data channel between the UE 1 and the UE 2. The media negotiation herein means that the UE 1 and the UE 2 negotiate media description (media description) information used by each other for performing the IMS call, that is, the UE 1 and the UE 2 need to know media information used by each other for receiving and sending media.

The foregoing describes, with reference to FIG. 1 to FIG. 4, an example system architecture applicable to embodiments of this application, and basic concepts in this application. The following describes, in detail with reference to the accompanying drawings, a communication method and a communication apparatus provided in this application.

A specific structure of an execution body of a method provided in embodiments of this application is not particularly limited in the following embodiments, provided that a program that records code of the method provided in embodiments of this application can be run to perform communication according to the method provided in embodiments of this application. For example, the method provided in embodiments of this application may be performed by a core network device and a terminal device, or a functional module that can invoke and execute the program in the core network device or the terminal device.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all the information may be identified and enabled in a unified manner, to reduce enabling overheads caused by enabling the same information separately.

Second, "first", "second", and various numeric numbers (for example, "#1" and "#2") shown in this application are merely for ease of description and are used for distinguishing between objects, but are not used to limit the scope of embodiments of this application, for example, are used to distinguish between different messages, but are not for describing a particular order or sequence. It should be understood that the objects described in such a way are interchangeable in an appropriate circumstance, so that a solution other than embodiments of this application can be described.

Third, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

Fourth, in this application, "preconfigured" may include "predefined", for example, defined in a protocol. "Predefined" may be implemented in a manner of prestoring corresponding code, a table, or other related information that may be for indication in a device (for example, including network elements). A specific implementation is not limited in this application.

Fifth, "store" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Sixth, "protocols" in embodiments of this application may be standard protocols in the communication field, for example, may include a 4G/5G protocol, a new radio (new radio, NR) protocol, and a related protocol applied to a future communication system. This is not limited in this application.

Seventh, in the method flowcharts in the accompanying drawings of the specification of this application, dashed-line boxes represent optional steps.

The following uses interaction between network elements as an example to describe in detail the communication method provided in embodiments of this application. It should be understood that, for terms and steps in embodiments of this application, refer to each other.

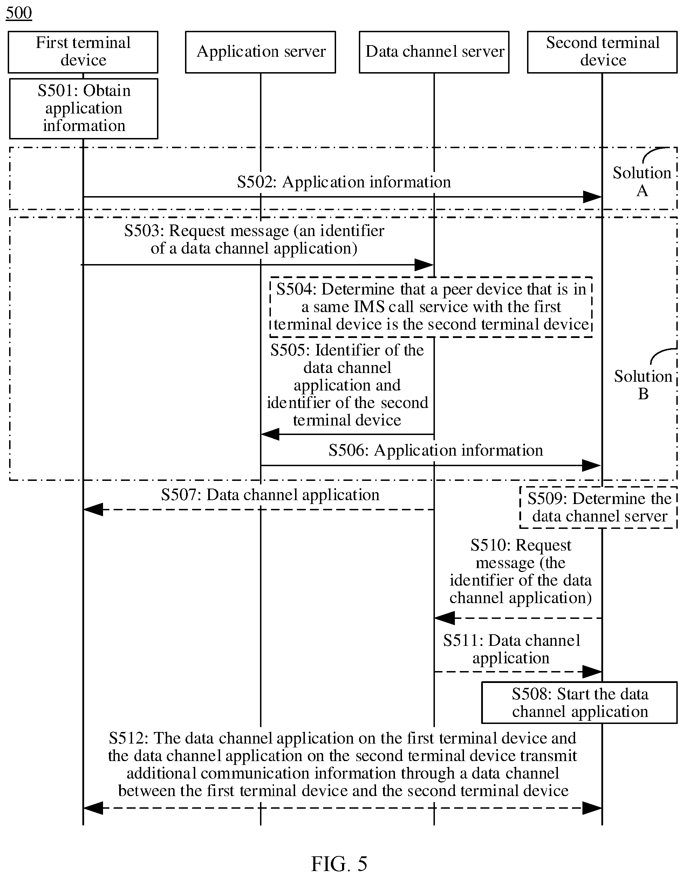

FIG. 5 is an example flowchart of a method 500 according to an embodiment of this application. The following describes the method 500 by using examples and with reference to each step in FIG. 5.

S501: A first terminal device obtains application information.

For example, the application information is information about a data channel application that is to be started or has been started by the first terminal device, and the data channel application is used to transmit additional communication information through a data channel between the first terminal device and a second terminal device. The second terminal device and the first terminal device are in a same IMS call service, and the additional communication information is used to perform communication in addition to a voice call or a video call between the first terminal device and the second terminal device.

Optionally, the first terminal device determines to start the data channel application.

For example, the first terminal device may determine, under a specific condition, to start the data channel application.

In a possible implementation, when detecting that a user selects the data channel application on the first terminal device, the first terminal device determines to start the data channel application. For example, the first terminal device displays an obtained bootstrap application on a screen in a manner of a picture, a text, or the like. When the user selects the data channel application in the bootstrap application, the first terminal device determines to start the data channel application.

In another possible implementation, the first terminal device may determine, based on the preconfiguration information, to start the data channel application. For example, the first terminal device preconfigures a priority list of data channel applications, where the priority list includes an identifier of one or more data channel applications. After obtaining bootstrap applications, the first terminal device determines, based on the priority list, to start the data channel application, where the data channel application is a data channel application that has a highest priority in the priority list and that belongs to the bootstrap applications.

It may be understood that the first terminal device may alternatively determine, under another condition, to start the data channel application. This is not limited in this application. After determining to start the data channel application, the first terminal device obtains the data channel application by using a data channel server. For details, refer to subsequent descriptions of S503 and S510. Details are not described herein temporarily.

In addition, the second terminal device obtains information about the data channel application, and then starts, based on the information about the data channel application, an application that is the same as the data channel application that has been started or is to be started by the first terminal device. It may be understood that "an application that is the same" herein means that the second terminal device and the first terminal device start different copies of a same application instead of a same copy of the same application. In other words, the data channel application obtained by the first terminal device and the data channel application obtained by the second terminal device have a same function and version, but are not physically a same application.

With reference to Solution A and Solution B in FIG. 5, the following describes two possible implementations of obtaining the application information by the second terminal device provided in this embodiment of this application.

### Solution A:

S502: The first terminal device sends the application information to the second terminal device.

For example, after obtaining the application information or determining to start the data channel application, the first terminal device sends the application information to the second terminal device.

For example, the first terminal device sends a session initiation protocol re-invite SIP re-INVITE request message to the second terminal device by using an application server, where the SIP re-INVITE request message includes the application information. In a possible implementation, the SIP re-INVITE request message is used by the first terminal device to negotiate, after an IMS call with the second terminal device is connected, media information used to establish the data channel between the first terminal device and the second terminal device. In other words, the first terminal device may reuse the SIP re-INVITE request message to send the application information to the second terminal device, thereby reducing signaling overheads.

For another example, the first terminal device sends a session initiation protocol update SIP UPDATE request message to the second terminal device by using an application server, where the SIP UPDATE request message includes the application information. In a possible implementation, the SIP UPDATE request message is used by the first terminal device to negotiate, before an IMS call with the second terminal device is connected, media information used to establish the data channel between the first terminal device and the second terminal device. In other words, the first terminal device may reuse the SIP UPDATE request message to send the application information to the second terminal device, thereby reducing signaling overheads.

For another example, the first terminal device sends a session initiation protocol information SIP INFO request message to the second terminal device, where the SIP INFO request message includes the application information. In a possible implementation, after determining to start the data channel application, the first terminal device may immediately generate the SIP INFO request message, and send the application information to the second terminal device by using the SIP INFO request message, thereby reducing a delay and improving efficiency of performing communication in addition to the voice call or the video call between the first terminal device and the second terminal device by using the data channel application.

For example, the application information includes an identifier of the data channel application. The identifier of the data channel application is used by the second terminal device to obtain the data channel application.

Optionally, the application information further includes information used to download the data channel application. For example, the information used to download the data channel application includes one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

The information used to download the data channel application is used by the second terminal device to determine how to obtain the data channel application, or the information used to download the data channel application is used by the second terminal device to determine a specific data channel server from which the data channel application is to be downloaded.

It may be understood that, when performing S502, the first terminal device may have obtained the data channel application, or may not obtain the data channel application yet. This is not limited in this application. In addition, when performing S502, the first terminal device may have started the data channel application, or may not start the data channel application yet. This is not limited in this application.

### Solution B:

S503: The first terminal device sends a request message to the data channel server. Correspondingly, the data channel server receives the request message from the first terminal device.

For example, when determining to start the data channel application, the first terminal device sends the request message to the data channel server, where the request message includes an identifier of the data channel application, and the request message is for requesting to obtain the data channel application.

Optionally, S504: The data channel server determines that a peer device that is in the same IMS call service with the first terminal device is the second terminal device. A specific process is not limited in this application.

S505: The data channel server sends the identifier of the data channel application and an identifier of the second terminal device to the application server. Correspondingly, the application server receives the identifier of the data channel application and the identifier of the second terminal device that are from the data channel server.

Optionally, the data channel server may further send indication information to the application server, where the indication information indicates the application server to send the information about the data channel application to the second terminal device.

S506: The application server sends the application information to the second terminal device.

For example, after receiving the identifier of the data channel application and the identifier of the second terminal device that are from the data channel server, the application server sends the application information to the second terminal device. For a specific meaning of the application information, refer to descriptions of step S502. Details are not described herein again.

It may be understood that, the application server sends the application information to the second terminal device, to trigger the second terminal device to obtain the application that is the same as the data channel application that is to be started or has been started by the first terminal device, that is, to trigger the second terminal device to obtain the data channel application that is the same as that of the first terminal device.

Optionally, S507: The data channel server sends the data channel application to the first terminal device. Correspondingly, the first terminal device receives the data channel application from the data channel server.

For example, after receiving the request message from the first terminal device, the data channel server sends the data channel application to the first terminal device. It may be understood that a sequence of performing S504 and S505, and S507 by the data channel server is not limited in this embodiment of this application.

S508: The second terminal device starts the data channel application based on the information about the data channel application.

For example, after receiving the application information from the application server, the second terminal device starts the data channel application. If the second terminal device has locally stored a cache (cache) of the data channel application, the second terminal device may directly start the data channel application; or if the second terminal device does not have a cache of the data channel application, the second terminal device starts the data channel application after obtaining the data channel application by using the data channel server. The following describes, with reference to S509 to S511, a process in which the second terminal device obtains the data channel application.

Optionally, S509: The second terminal device determines the data channel server based on the information about the data channel application.

For example, after the second terminal device receives the application information, when the application information includes the information used to download the data channel application, the second terminal device determines the data channel server based on the information about the data channel application, that is, determines to obtain the data channel application from the data channel server.

For example, when the information used to download the data channel application includes the information indicating the network to which the data channel application belongs, the second terminal device determines to obtain the data channel application from the data channel server in the network to which the data channel application belongs.

For another example, when the information used to download the data channel application includes the stream identifier that is of the bootstrap data channel and that is used by the first terminal device to download the data channel application, the second terminal device determines, based on the stream identifier that is of the bootstrap data channel and that is used by the first terminal device to download the data channel application, the stream identifier that is of the bootstrap data channel and that is used by the second terminal device to download the data channel application, to determine to obtain the data channel application through the bootstrap data channel corresponding to the stream identifier.

For another example, when the information used to download the data channel application includes the stream identifier that is of the bootstrap data channel and that is used by the second terminal device to download the data channel application, the second terminal device determines to obtain the data channel application through the bootstrap data channel corresponding to the stream identifier.

S510: The second terminal device sends a request message to the data channel server. Correspondingly, the data channel server receives the request message from the second terminal device.

For example, after receiving the information about the data channel application from the first terminal device, the second terminal device sends the request message to the data channel server based on the information about the data channel application, where the request message includes the identifier of the data channel application, and the request message is for requesting to obtain the data channel application.

Optionally, S511: The data channel server sends the data channel application to the second terminal device. Correspondingly, the second terminal device receives the data channel application from the data channel server.

For example, after receiving the request message from the second terminal device, the data channel server obtains the data channel application based on the identifier of the data channel application carried in the request message, and then sends the data channel application to the second terminal device.

Optionally, when receiving the data channel application from the data channel server, the second terminal device sends indication information to the first terminal device, where the indication information indicates that the second terminal device successfully obtains the data channel application.

It may be understood that, when locally storing the data channel application, the second terminal device may still initiate the request message in step S510. In this case, the second terminal device may include a version number of the locally cached data channel application in the request message. After receiving the request message from the second terminal device, the data channel server checks whether the version number carried in the request message is a newest version number of the data channel application. If the version number carried in the request message is the newest version number of the data channel application, the data channel server may directly indicate the second terminal device to start the locally cached data channel application. If the version number carried in the request message is not the newest version number of the data channel application, the data channel server may send, to the second terminal device, the data channel application of the newest version corresponding to the identifier of the data channel application carried in the request message.

Optionally, S512: The data channel application of the first terminal device and the data channel application of the second terminal device transmit the additional communication information through the data channel between the first terminal device and the second terminal device.

For example, the data channel between the first terminal device and the second terminal device may be established after the first terminal device receives the indication information that is from the second terminal device and that indicates that the second terminal device successfully obtains the data channel application, and the data channel application of the first terminal device and the data channel application of the second terminal device may transmit the additional communication information through the data channel, so that the first terminal device and the second terminal device perform communication in addition to the voice call or the video call.

In the foregoing solution, when determining to start the data channel application, the first terminal device sends information about the data channel application to a peer terminal device (namely, the second terminal device) that performs the internet protocol multimedia subsystem call with the first terminal device, to trigger the second terminal device to obtain the application that is the same as the data channel application that has been started or is to be started by the first terminal device, so that the first terminal device and the second terminal device can perform communication in addition to the voice call or the video call by using the data channel applications that can communicate with each other, thereby improving user experience.

It may be understood that the method 500 herein may correspond to a subsequent method 600 to a subsequent method 800, that is, the method 600 to the method 800 may be considered as several possible implementations corresponding to the method 500. Specifically, the first terminal device in the method 500 may correspond to UE 1 in the method 600 to the method 800, the second terminal device in the method 500 may correspond to UE 2 in the method 600 to the method 800, the application server in the method 500 may correspond to an IMS AS 1 in the method 600 to the method 800, the data channel server in the method 500 may correspond to a DCS 1 in the method 600 to the method 800, the data channel application in the method 500 may correspond to an application X in the method 600 to the method 800, and the application information in the method 500 may correspond to information about the application X in the method 600 to the method 800.

For example, Solution A in the method 500 may correspond to solutions in the method 600 and the method 700. For example, S501 in the method 500 may correspond to S601 to S606 in the method 600, S502 in the method 500 may correspond to S610 to S613 in the method 600, S507 in the method 500 may correspond to S608 in the method 600, S508 to S511 in the method 500 may correspond to S614 to S617 in the method 600, and S512 in the method 500 may correspond to S620 to S623 in the method 600. In another example, S501 in the method 500 may correspond to S701 to S706 in the method 700, S502 in the method 500 may correspond to S707 in the method 700, S507 in the method 500 may correspond to S714 in the method 700, S508 to S511 in the method 500 may correspond to S709 to S712 in the method 700, and S512 in the method 500 may correspond to S722 to S725 in the method 700.

For example, Solution B in the method 500 may correspond to a solution in the method 800. In an example, S501 in the method 500 may correspond to S801 to S806 in the method 800, S503 in the method 500 may correspond to S807 in the method 800, S504 and S505 in the method 500 may correspond to S808 and S809 in the method 800, S506 in the method 500 may correspond to S811 in the method 800, S507 in the method 500 may correspond to S817 in the method 800, S508 to S511 in the method 500 may correspond to S813 to S816 in the method 800, and S512 in the method 500 may correspond to S825 to S827 in the method 800.

It may be further understood that Solution A in the method 500 corresponds to a method procedure of a first communication system. The first communication system includes at least a first terminal device and a second terminal device. The first terminal device may perform a procedure corresponding to the method performed by the first terminal device in Solution A in the method 500, and the second terminal device may perform a procedure corresponding to the method performed by the second terminal device in Method A in the method 500.

It may be further understood that Solution B in the method 500 corresponds to a method procedure of a second communication system. The second communication system includes at least an application server and a data channel server. The data channel server may perform a procedure corresponding to the method performed by the data channel server in Solution B in the method 500, and the application server may perform a procedure corresponding to the method performed by the application server in Solution B in the method 500. Optionally, the second communication system further includes a second terminal device. The second terminal device may perform a procedure corresponding to the method performed by the second terminal device in Method B in the method 500.

The following describes, in detail based on a 5G system, a communication method provided in an embodiment of this application.

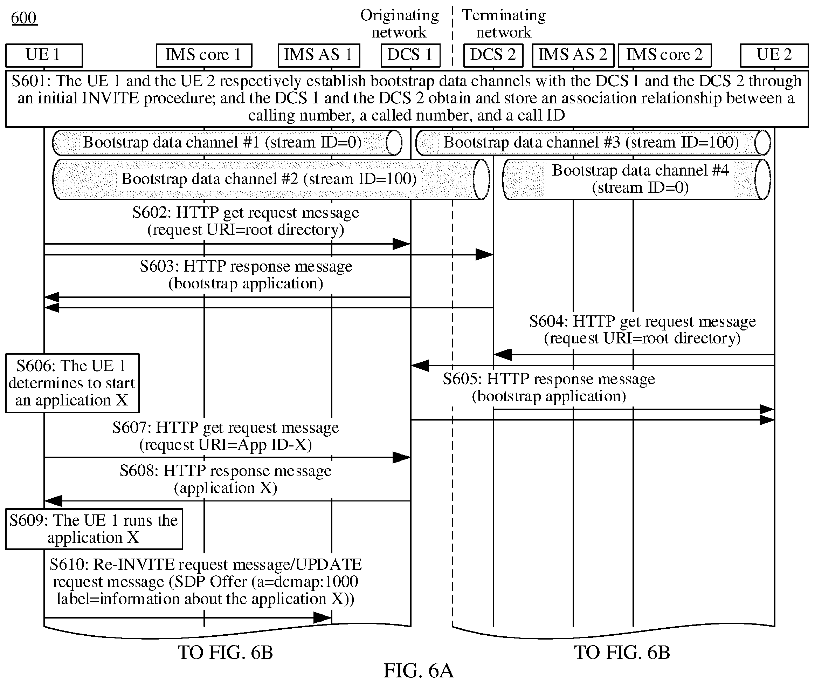

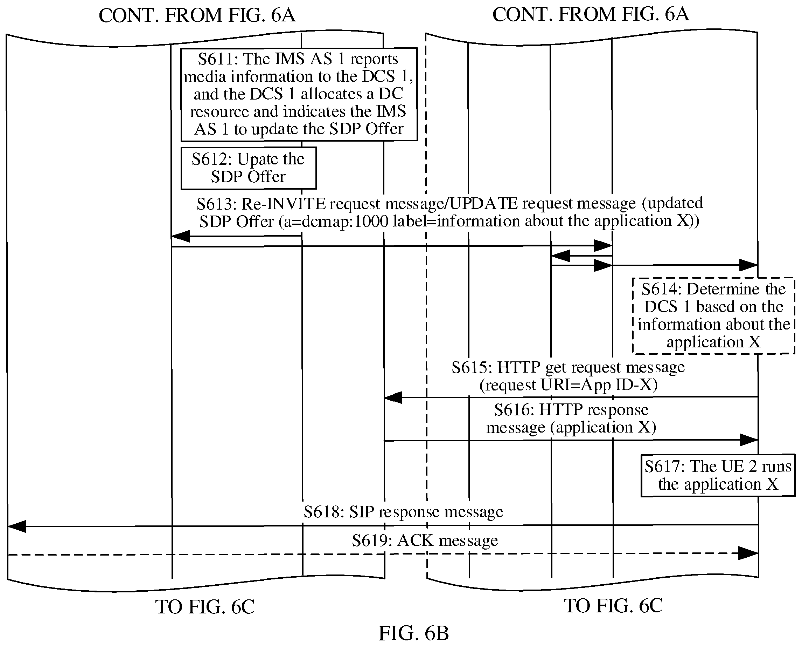

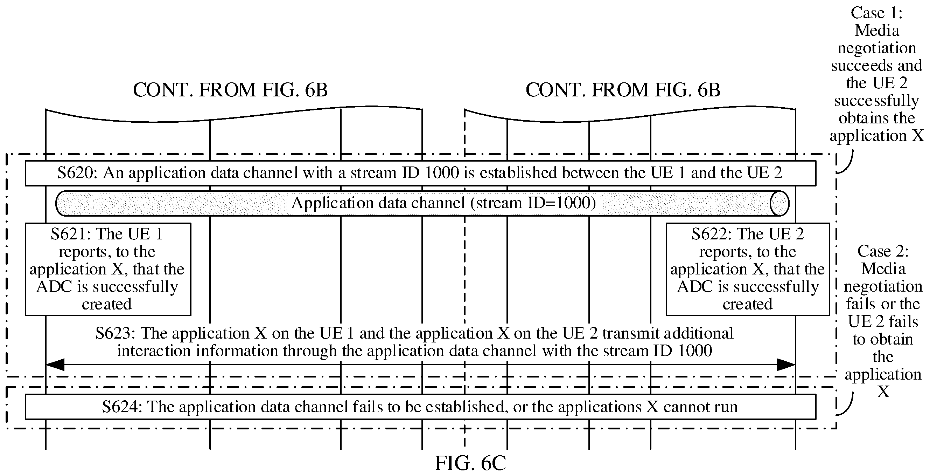

FIG. 6A, FIG. 6B, and FIG. 6C are an example flowchart of a method 600 according to an embodiment of this application. The method 600 may be a possible implementation of Solution A in the method 500. In the method 600, after determining to start an application X, UE 1 reuses a re-INVITE procedure, and sends information about the application X to UE 2. The UE 2 may obtain the application X based on the received information about the application X, so that the UE 1 and the UE 2 may perform communication in addition to a voice call or a video call by using the applications X.

S601: The UE 1 and the UE 2 respectively establish bootstrap data channels with a DCS 1 and a DCS 2 through an initial INVITE procedure; and the DCS 1 and the DCS 2 obtain and store an association relationship between a calling number, a called number, and a call ID.

For example, in this embodiment of this application, the UE 1 and the UE 2 are two devices in a same IMS call service, or the UE 1 and the UE 2 are peer devices of each other in the IMS call. It is assumed that the UE 1 is calling-party user equipment, and the UE 2 is called-party user equipment. In this case, an IMS network that provides a service for the UE 1 may be referred to as an originating network (Originating Network), and an IMS network that provides a service for the UE 2 may be referred to as a terminating network (Terminating Network). In addition, for the UE 1, the originating network is a local network (Local Network), and the terminating network is a remote network (Remote Network) (or referred to as a peer network); and for the UE 2, the terminating network is a local network, and the originating network is a remote network (or referred to as a peer network).

For convenience, network elements in the originating network in this embodiment of this application are denoted as an IMS core 1, an IMS AS 1, and a DCS 1, and network elements in the terminating network in this embodiment of this application are denoted as an IMS core 2, an IMS AS 2, and a DCS 2. It may be understood that the foregoing network elements are merely used as an example, and other network elements may be further included in the originating network and the terminating network. This is not limited in this application.

It may be understood that, in this embodiment of this application, both the UE 1 and the UE 2 are multimedia telephony service for IMS (multimedia telephony service for IMS, MTSI) terminals (namely, DC MTSI terminals) that support data channels, and both the originating network and the terminating network also support the data channels.

When the UE 1 and the UE 2 need or intend to perform communication in addition to the voice call or the video call by using a data channel application, the UE 1 and the UE 2 may respectively establish the bootstrap data channels with the DCS 1 in the originating network and the DCS 2 in the terminating network through the initial invite (INVITE) procedure, to obtain bootstrap applications through the bootstrap data channels. For example, as shown in FIG. 6A, FIG. 6B, and FIG. 6C, the UE 1 establishes a bootstrap data channel #1 with the DCS 1 and a bootstrap data channel #2 with the DCS 2; and the UE 2 establishes a bootstrap data channel #3 with the DCS 1 and a bootstrap data channel #4 with the DCS 2.

For convenience, in this embodiment of this application, the bootstrap data channel between the UE and a local DCS (namely, the DCS in the local network) is denoted as a bootstrap data channel with a stream ID 0 (that is, a stream ID of the bootstrap data channel=0), and the bootstrap data channel between the UE and a remote DCS (namely, the DCS in the remote network) is denoted as a bootstrap data channel with a stream ID 100 (that is, a stream ID of the bootstrap data channel=100). Therefore, the bootstrap data channel #1 and the bootstrap data channel #4 are bootstrap data channels with the stream ID 0, and the bootstrap data channel #2 and the bootstrap data channel #3 are bootstrap data channel with the stream ID 100. It may be understood that the stream ID corresponding to the bootstrap data channel is merely an example, and other stream IDs may alternatively be used to indicate different bootstrap data channels. For example, the bootstrap data channel between the UE and the local DCS may be donated as a bootstrap data channel with a stream ID 10 (that is, a stream ID=10), and the bootstrap data channel between the UE and the peer DCS may be donated as a bootstrap data channel with a stream ID 110 (that is, a stream ID=110). This is not limited in this application.

In addition, the DCS 1 and the DCS 2 may respectively obtain and store the association relationship between the calling number, the called number, and the call ID. For example, the UE 1 and the UE 2 perform media negotiation through the INVITE procedure, to negotiate media information needed for establishing the bootstrap data channels #1, #2, #3, and #4, and the DCS 1 and the DCS 2 obtain and store the association relationship between the calling number, the called number, and the call ID through the INVITE procedure. In addition, the DCS 1 further obtains the media information for the bootstrap data channel #1 and the bootstrap data channel #3, and the DCS 2 further obtains the media information for the bootstrap data channel #2 and the bootstrap data channel #4. Specific examples are provided as follows.

The UE 1 sends an initial INVITE request message to the IMS AS 1, and includes call information and SDP Offer information in the initial INVITE request message, where the call information includes the calling number (identifying the UE 1), the called number (identifying the UE 2), the call ID (identifying the IMS call between the UE 1 and the UE 2), and the like, the SDP Offer information includes the media information (for example, an IP address and a port, a TLS ID and a certificate, and a DC stream ID) used by the UE 1 to establish the bootstrap data channel #1 and the bootstrap data channel #2.

After receiving the initial INVITE request message from the UE 1, the IMS AS 1 reports, to the DCS 1, the call information and the media information that are carried in the initial INVITE message, and applies to DCS 1 for allocating DC resources for establishing the bootstrap data channel #1 and the bootstrap data channel #3.

Correspondingly, the DCS 1 receives and stores the association relationship between the calling number, the called number, and the call ID in the current call, and allocates the DC resources for establishing the bootstrap data channels. Then, the DCS 1 stores the media information at both ends of the bootstrap data channel #1 and the media information at a network side of the bootstrap data channel #3, and indicates the IMS AS 1 to update the SDP Offer information.

The IMS AS 1 updates the SDP Offer information based on the indication of the DCS 1, where updated SDP Offer information includes the media information used by the DCS 1 to establish the bootstrap data channel #3 and the media information used by the UE 1 to establish the bootstrap data channel #2. Then, the IMS AS 1 routes the initial INVITE request message to the IMS AS 2 via the IMS core 1 and the IMS core 2.

After receiving the initial INVITE request message, the IMS AS 2 reports, to the DCS 2, the call information and the media information that are carried in the initial INVITE request message, and applies to the DCS 2 for allocating DC resources for establishing the bootstrap data channel #2 and the bootstrap data channel #4.

Correspondingly, the DCS 2 receives and stores the association relationship between the calling number, the called number, and the call ID. In addition, the DCS 2 allocates the DC resources for establishing the bootstrap data channels. Then, the DCS 2 stores the media information at both ends of the bootstrap data channel #2 and the media information at a network side of the bootstrap data channel #4, and indicates the IMS AS 2 to update the SDP Offer information.

The IMS AS 2 updates the SDP Offer information based on the indication of the DCS 2, where updated SDP Offer information includes the media information used by the DCS 2 to establish the bootstrap data channel #4 and the media information used by the DCS 1 to establish the bootstrap data channel #3. Then, the IMS AS 2 routes the initial INVITE request message to the UE 2 via the IMS core 2.

The UE 2 returns a 18X response message to the UE 1 based on the initial INVITE request message, and includes SDP Answer information in the 18X response message, where the SDP Answer includes the media information used by the UE 2 to establish the bootstrap data channel #3 and the bootstrap data channel #4.

After receiving the 18X response message, the IMS AS 2 reports, to the DCS 2, the call information and the media information that are carried in the 18X response message. The DCS 2 stores the media information for the bootstrap data channel #4 on a UE 2 side, and indicates the IMS AS 2 to update the SDP Answer information.

The IMS AS 2 updates the SDP Answer information based on the indication of the DCS 2, where updated SDP Answer information includes the media information used by the DCS 2 to establish the bootstrap data channel #2 and the media information used by the UE 2 to establish the bootstrap data channel #3. Then, the IMS AS 2 routes the 18X response message to the IMS AS 1 via the IMS core 2 and the IMS core 1.

After receiving the 18X response message, the IMS AS 1 reports, to the DCS 1, the call information and the media information that are carried in the 18X response message. The DCS 1 stores the media information for the bootstrap data channel #3 on the UE 2 side, and indicates the IMS AS 1 to update the SDP Answer information.

The IMS AS 1 updates the SDP Answer information based on the indication of the DCS 1, where updated SDP Answer information includes the media information used by the DCS 1 to establish the bootstrap data channel #1 and the media information used by the DCS 2 to establish the bootstrap data channel #2. Then, the IMS AS 1 routes the 18X response message to the UE 1 via the IMS core 1.

The UE 1 obtains the media information for the bootstrap data channels #1 and #2 on the network side from the 18X response message.

Through the foregoing process, the UE 1 and the UE 2 establish the bootstrap data channel #1 to the bootstrap data channel #4 through the media negotiation process.

Further, the UE 1 and the UE 2 respectively request the DCS 1 and the DCS 2 to obtain bootstrap applications through the established bootstrap data channels. The following provides an example for description with reference to S602 to S605.

S602: The UE 1 separately sends HTTP get request (HTTP GET Request) messages to the DCS 1 and the DCS 2, where a request URI (Request URI) of the HTTP get request message is a root directory, and indicates that the UE 1 requests to obtain the bootstrap application. Correspondingly, the DCS 1 and the DCS 2 respectively receive the HTTP get request messages from the UE 1.

S603: The DCS 1 and the DCS 2 respectively send HTTP response messages to the UE 1, where the HTTP response message includes the bootstrap application. Correspondingly, the UE 1 receives the HTTP response messages from the DCS 1 and the DCS 2 respectively.

For example, the UE 1 sends the HTTP get request message to the DCS 1 through the bootstrap data channel #1 (namely, the bootstrap data channel with the stream ID 0). In addition, the request URI (Request URI) of the HTTP get request message is the root directory, and indicates that the UE 1 requests to obtain the bootstrap application from the DCS 1. In response to the HTTP get request message, the DCS 1 sends the HTTP response message to the UE 1 through the bootstrap data channel #1, and includes the bootstrap application on the DCS 1 in a body of the response message. For convenience, the bootstrap application sent by the DCS 1 to the UE 1 is denoted as a bootstrap application #1, and the bootstrap application #1 includes a list of DC Apps available to the UE 1 in the originating network.

Similarly, the UE 1 obtains the bootstrap application (denoted as a bootstrap application #2) on the DCS 2 from the DCS 2 through the bootstrap data channel #2, where the bootstrap application #2 includes a list of DC Apps available to the UE 1 in the terminating network.

S604: The UE 2 separately sends HTTP get request (HTTP GET Request) messages to the DCS 1 and the DCS 2, where a request URI (Request URI) of the HTTP get request message is a root directory, and indicates that the UE 2 requests to obtain the bootstrap application. Correspondingly, the DCS 1 and the DCS 2 respectively receive the HTTP get request messages from the UE 2.

S605: The DCS 1 and the DCS 2 respectively send HTTP response messages to the UE 2, where the HTTP response message includes the bootstrap application. Correspondingly, the UE 2 receives the HTTP response messages from the DCS 1 and the DCS 2 respectively.

It may be understood that S604 and S605 are respectively similar to S602 and S603, and a specific process is not limited herein. In S604 and S605, the UE 2 may obtain the bootstrap application (denoted as a bootstrap application #3) on the DCS 1 from the DCS 1 through the bootstrap data channel #3, where the bootstrap application #3 includes a list of DC Apps available to the UE 2 in the originating network; and obtain the bootstrap application (denoted as a bootstrap application #4) on the DCS 2 from the DCS 2 through the bootstrap data channel #4, where the bootstrap application #4 includes a list of DC Apps available to the UE 2 in the terminating network.

It may be understood that a sequence of performing S602 and S603, and S604 and S605 is not limited in this application.

S606: The UE 1 determines to start the application X.

For example, the UE 1 may determine, under a specific condition, to start the application X, where the application X is any data channel application in the bootstrap applications (including the bootstrap application #1 and the bootstrap application #2) obtained by the UE 1.

In a possible implementation, when detecting that a user selects the application X, the UE 1 determines to start the application X. For example, after obtaining the bootstrap applications, the UE 1 displays the obtained bootstrap applications (namely, the list of DC Apps) on a screen. The UE 1 may display the bootstrap applications on the screen in a manner of a picture, a text, or the like. This is not limited in this application. It may be understood that, the UE 1 may display the bootstrap application #1 and the bootstrap application #2 through combination, or may display the bootstrap application #1 and the bootstrap application #2 by using different tab pages. This is not limited in this application. The user may select any data channel application from the list of DC Apps displayed on the screen. When the user selects the application X, for example, the user taps a picture or a text corresponding to the application X on the screen of the UE 1, the UE 1 determines to start the application X. It may be further understood that each DC App in the bootstrap applications corresponds to one App ID, and the App ID may uniquely identify one DC App on the DCS, and is mapped to a resource location of the application on the DCS.

In another possible implementation, the UE 1 may determine, based on preconfiguration information, to start the application X. For example, the UE 1 preconfigures a priority list of DC Apps, and the priority list includes an identifier of one or more DC Apps. The UE 1 determines, based on the priority list, to start an application X, where the application X is a DC App that has a highest priority in the priority list and that belongs to the bootstrap applications obtained by the UE 1.

The UE 1 may alternatively determine, under another condition, to start the application X. This is not limited in this application.

S607: The UE 1 sends an HTTP get request message to the DCS 1. Correspondingly, the DCS 1 receives the HTTP get request message from the UE 1.

For example, when determining to start the application X, the UE 1 sends the HTTP get request message to a DCS in a network to which the application X belongs, to request to obtain the application X.

It may be understood that the application X may belong to the originating network (that is, the application X belongs to the bootstrap application #1), or may belong to the terminating network (that is, the application X belongs to the bootstrap application #2). This is not limited in this application. For convenience, in this embodiment of this application, an example in which the application X belongs to the originating network is used for description. For example, if the user selects the application X from the bootstrap application #1, the UE 1 sends an HTTP get request message to the DCS 1 through the bootstrap data channel #1 (namely, the bootstrap data channel with the stream ID 0), where a request URI (Request URI) of the HTTP get request message is an App ID (denoted as an App ID-X) of the application X, for requesting to obtain the application X.

It may be further understood that the method 600 is described by using an example in which the UE 1 obtains the application X in an IMS call setup phase. However, this application is not limited thereto. For example, the UE 1 may obtain the application X after the IMS call is connected. In this case, in S601, the UE 1 and the UE 2 need to negotiate to establish bootstrap data channels through the re-INVITE procedure (instead of the initial INVITE procedure).

S608: The DCS 1 sends an HTTP response message to the UE 1. Correspondingly, the UE 1 receives the HTTP response message from the DCS 1.

For example, after receiving the HTTP get request message from the UE 1, the DCS 1 determines a resource location of the application X based on the App ID-X, then sends an HTTP response message to the UE 1 through the data channel #1, and includes the application X in a body part of the HTTP response message.

Correspondingly, the UE 1 receives an HTTP response message from the DCS 1, and obtains the application X from the HTTP response message.

S609: The UE 1 runs the application X.

For example, after obtaining the application X, the UE 1 runs the application X. For example, the UE 1 displays, in a web browser, an HTML page corresponding to the application X and executes a JavaScript script in the HTML page.

Further, the UE 1 and the UE 2 negotiate media information that is for an application data channel and that is needed by the applications X, and establish the application data channel used to transmit additional communication information, so that the UE 1 and the UE 2 can perform communication in addition to the voice call or the video call by using the applications X. The following provides an example for description with reference to S610 to S619.

S610: The UE 1 sends a re-invite (re-INVITE) request message/update (UPDATE) request message to the IMS AS 1. Correspondingly, the IMS AS 1 receives the re-INVITE request message/UPDATE request message from the UE 1.

It may be understood that, if the IMS call between the UE 1 and the UE 2 is already connected before S610, the UE 1 negotiates the media information with the UE 2 through the re-INVITE procedure, that is, the UE 1 sends the re-INVITE request message to the IMS AS 1 in S610; or if the IMS call between the UE 1 and the UE 2 is not connected before S610, the UE 1 negotiates the media information with the UE 2 through an update (UPDATE) procedure, that is, the UE 1 sends the UPDATE request message to the IMS AS 2 in S610. For convenience, in this embodiment of this application, an example in which the UE 1 sends the re-INVITE request message to the IMS AS 1 is used for description.

For example, after executing the JavaScript script in the application X, the UE 1 is triggered to send a re-INVITE request message to the UE 2, where the re-INVITE request message is used to negotiate media information that is for the application data channel and that is needed by the application X.

The re-INVITE request message includes SDP Offer information, where the SDP Offer information includes the media information (for example, an IP address, port information, a TLS ID and a certificate, and a QoS requirement used by the UE 1 to interconnect with an application data channel with a stream ID 1000) for the application data channel supported (or intended to be used) by the UE 1.

The SDP Offer information includes an attribute line "a=dcmap", and the attribute line "a=dcmap" is used to define the media information for the application data channel supported by the UE 1. Optionally, the SDP Offer information may further include an attribute line "a=dcsa", where the attribute line "a=dcsa" is used to define other attribute parameters related to the application data channel other than the media information for the application data channel.

It may be understood that, when the SDP Offer information includes a plurality of attribute lines "a=dcmap", it indicates that the application X needs to use a plurality of application data channels, and the plurality of attribute lines "a=dcmap" are respectively used to define media parameters that need to be negotiated for the plurality of application data channels.

The UE 1 may include the information about the application X by using the attribute line "a=dcmap" and/or the attribute line "a=dcsa" in the SDP Offer information.

The information about the application X includes the identifier (App ID-X) of the application X. The identifier of the application X is used by the UE 2 to obtain the application X.

Optionally, the information about the application X further includes information used to download the application X. The information used to download the application X is used by the UE 2 to determine how to obtain the application X (that is, a network from which the application X is obtained, or a bootstrap data channel through which the application X is obtained). The information used to download the application X and the identifier of the application X may be carried in a same parameter of an attribute line, or may be carried in different parameters of a same attribute line, or may be carried in different attribute lines. This is not limited in this application.

In a possible implementation (denoted as Manner 1), the information used to download the application X is information about the network to which the application X belongs. For example, when a value of the information used to download the application X is "0", it indicates that the application X is provided by the originating network; or when a value of the information used to download the application X is "1", it indicates that the application X is provided by the terminating network. For another example, when a value of the information used to download the application X is "Local", it indicates that the application X is provided by the local network of the UE 1 (in this example, the local network of the UE 1 is the originating network). When a value of the information used to download the application X is "Remote", it indicates that the application X is provided by the remote network of the UE 1 (in this example, the remote network of the UE 1 is the terminating network). For another example, when a value of the information used to download the application X is "Local", it indicates that the application X is provided by the local network of the UE 2 (in this example, the local network of the UE 2 is the terminating network). When a value of the information used to download the application X is "Remote", it indicates that the application X is provided by the remote network of the UE 2 (in this example, the remote network of the UE 2 is the originating network). The UE 2 may determine, based on the information used to download the application X, whether the application X belongs to the originating network or the terminating network. When the application X belongs to the originating network, the UE 2 determines to download the application X through the bootstrap data channel with the stream ID 100 (namely, the bootstrap data channel #3); or when the application X belongs to the terminating network, the UE 2 determines to download the application X through the bootstrap data channel with the stream ID 0 (namely, the data channel #4).

In another possible implementation (denoted as Manner 2), the information used to download the application X is a stream ID that is of a bootstrap data channel and that is used by the UE 1 to download the application X. For example, when a value of the information used to download the application X is "0", it indicates that the UE 1 downloads the application X through the bootstrap data channel with the stream ID 0 (namely, the bootstrap data channel #1); or when a value of the information used to download the application X is "100", it indicates that the UE 1 downloads the application X through the bootstrap data channel with the stream ID 100 (namely, the bootstrap data channel #2). The UE 2 may determine, based on the information used to download the application X, whether the UE 2 needs to download the application X through the bootstrap data channel with the stream ID 0 or through the bootstrap data channel with the stream ID 100. For example, when the value of the information used to download the application X is "0", the UE 2 determines to download the application X through the bootstrap data channel with the stream ID 100 (namely, the bootstrap data channel #3); or when the value of the information used to download the application X is "100", the UE 2 determines to download the application X through the bootstrap data channel with the stream ID 0 (namely, the bootstrap data channel #4).

In still another possible implementation (denoted as Manner 3), the information used to download the application X is a stream ID that is of a bootstrap data channel and that is used by the UE 2 to download the application X. For example, when the application X belongs to the originating network, and a value of the information used to download the application X is "100", it indicates that the UE 2 may download the application X through the bootstrap data channel with the stream ID 100 (namely, the bootstrap data channel #3); or when the application X belongs to the terminating network, and a value of the information used to download the application X is "0", it indicates that the UE 2 may download the application X through the bootstrap data channel with the stream ID 0 (namely, the bootstrap data channel #4).

The following uses the foregoing manner 1 as an example to provide several possible encoding examples in which attribute lines carry the information about the application X.

Example 1: a=dcmap:1000 label="local_AppScreenSharingvl.1.1".

In Example 1, the attribute line a=dcmap:1000 indicates that the application X needs to establish the application data channel with the stream ID 1000 (that is, a stream ID=1000, and the stream ID is merely used as an example). The parameter "label" of the attribute line "a=dcmap" carries the information about the application X. "local" in the parameter indicates that the application X belongs to the local network of the UE 1 (in this example, the local network of the UE 1 is the originating network), and "AppScreenSharingv1.1.1" in the parameter indicates the identifier of the application X.

Example 2: a=dcmap:1000 appInfo="0_AppScreenSharing20220808".

In Example 2, the attribute line a=dcmap:1000 indicates that the application X needs to establish the application data channel with the stream ID 1000. The parameter "appInfo" of the attribute line "a=dcmap" carries the information about the application X. "0" in the parameter indicates that the application X belongs to the local network of the UE 1 (in this example, the local network of the UE 1 is the originating network), and "AppScreenSharing20220808" in the parameter indicates the identifier of the application X.

Example 3: a=dcsa:1000 source="local"; appId="AppScreenSharingv1.1.1".

In Example 3, the attribute line a=dcmap:1000 indicates that the application X needs to establish the application data channel with the stream ID 1000. The attribute line a=dcsa:1000 indicates that the application X needs to establish the application data channel with the stream ID 1000. The parameter "source" and the parameter "appId" of the attribute line "a=dcsa" respectively carry the information used to download the application X and the identifier of the application X. "source="local"" in the parameter indicates that the application X belongs to the local network of the UE 1 (in this example, the local network of the UE 1 is the originating network), and "appId="AppScreenSharingv1.1.1"" in the parameter indicates that the identifier of the application X is "AppScreenSharingv1.1.1".

Example 4: a=dcmap:1000 label="local"; a=dcsa:1000 appId="AppScreenSharingv1.1.1".

In Example 4, the attribute lines a=dcmap:1000 and a=dcsa:1000 indicate that the application X needs to establish the application data channel with the stream ID 1000. The parameter "label" of the attribute line "a=dcmap" carries the information used to download the application X, and the parameter "appId" of the attribute line "a=dcsa" carries the identifier of the application X. "label="local""in the parameter indicates that the application X belongs to the local network of the UE 1 (in this example, the local network of the UE 1 is the originating network), and "appId="AppScreenSharingv1.1.1"" in the parameter indicates that the identifier of the application X is "AppScreenSharingv1.1.1".

It may be understood that, when the application X needs to establish a plurality of application data channels, the SDP Offer information includes a plurality of attribute lines "a=dcmap", and the UE 1 may include the information about the application X in any one or more of the plurality of attribute lines "a=dcmap". This is not limited in this application.

S611: The IMS AS 1 reports the media information to the DCS 1, and the DCS 1 allocates the DC resource and indicates to update the SDP Offer.

For example, after the IMS AS 1 receives the re-INVITE request message/UPDATE request message from the UE 1, the IMS AS 1 reports the media information of the application data channel to the DCS 1, and the DCS 1 allocates a DC resource for the corresponding application data channel based on the information, and indicates the IMS AS 1 to update the SDP Offer information.

S612: The IMS AS 1 updates the SDP Offer information.

For example, the IMS AS 1 updates the SDP Offer information based on the indication of the DCS 1. A specific manner is not limited in this application. It may be understood that the IMS AS 1 reserves (in other words, does not modify) the information about the application X carried in the SDP Offer information.

S613: The IMS AS 1 sends a re-INVITE request message/UPDATE request message to the UE 2. Correspondingly, the UE 2 receives the re-INVITE request message/UPDATE request message from the IMS AS 1.

For example, after updating the SDP Offer information, the IMS AS 1 routes the re-INVITE request message/UPDATE request message to the UE 2 via the IMS core 1, the IMS core 2, and the IMS AS 2. For convenience, the following uses the re-INVITE request message as an example for description. The re-INVITE request message includes updated SDP Offer information, and the updated SDP Offer information includes the information about the application X described in S610.

Optionally, S614: The UE 2 determines the DCS 1 based on the information about the application X.

For example, after receiving the re-INVITE request message, the UE 2 parses the parameter of the attribute line corresponding to the application data channel to obtain the information about the application X. The information about the application X includes the APP ID-X, and the UE 2 determines, based on the APP ID-X, to obtain the application X corresponding to the APP ID-X. Optionally, the information about the application X further includes the information used to download the application X. The UE 2 determines the DCS 1 based on the information used to download the application X, that is, determines to request the DCS 1 in the originating network to obtain the application X.

It may be understood that, in a possible implementation, if the information about the application X does not include the information used to download the application X, the UE 2 may obtain the application X from the DCS 1 in the originating network by default. That is, when the information about the application X does not include the information used to download the application X, it indicates by default that the application X belongs to the originating network. Alternatively, in another possible implementation, the UE 2 may alternatively separately (or simultaneously) request the DCS 1 in the originating network and the DCS 2 in the terminating network to obtain the application X. This is not limited in this application.

S615: The UE 2 sends an HTTP get request message to the DCS 1. Correspondingly, the DCS 1 receives the HTTP get request message from the UE 2.

For example, the UE 2 sends the HTTP get request message to the DCS 1 through the bootstrap data channel #3 (namely, the bootstrap data channel with the stream ID 100) based on the received information about the application X, where a request URI (Request URI) of the HTTP get request message is the App ID-X, for requesting to obtain the application X.

S616: The DCS 1 sends an HTTP response message to the UE 1. Correspondingly, the UE 2 receives the HTTP response message from the DCS 1.

For example, after receiving the HTTP get request message from the UE 2, the DCS 1 determines a resource location of the application X based on the App ID-X, then sends an HTTP response message to the UE 2 through the data channel #3, and includes the application X in a body part of the HTTP response message.

Correspondingly, the UE 2 receives an HTTP response message from the DCS 1, and obtains the application X from the HTTP response message.

S617: The UE 2 runs the application X.

For example, if successfully obtaining the application X, the UE 2 runs the application X. For example, the UE 2 displays, in a web browser, an HTML page corresponding to the application X and executes a JavaScript script in the HTML page.

Further, the UE 2 determines a subsequent operation based on a negotiation case of the media information and an obtaining case of the application X. The following respectively describes two cases by using examples.

Case 1: The negotiation on the media information succeeds and the UE 2 successfully obtains the application X.

S618: The UE 2 sends a SIP response message to the UE 1. Correspondingly, the UE 1 receives the SIP response message from the UE 2.

For example, in Case 1, if the UE 2 determines, based on the SDP Offer information, to agree with the UE 1 to establish the corresponding application data channel (for example, the UE 2 supports a part or all of media information provided in the SDP Offer information), and the UE 2 successfully obtains the application X and runs the application X (that is, S615 to S617 are successfully performed), the UE 2 sends the SIP response message to the UE 1 in response to the re-INVITE request message. In this case, the SIP response message may be a 200 OK response message.

The SIP response message includes SDP Answer information determined by the UE 1 based on the SDP Offer information, and the SDP Answer information includes the media information supported (or intended to be used) by the UE 2 in the media information provided in the SDP Offer information.

It may be understood that, the UE 1 includes, in the SIP response message, the SDP Answer information determined based on the SDP Offer information, to implicitly indicate that the negotiation on the media information succeeds (or to indicate that the UE 2 agrees with the UE 1 to establish the application data channel between the UE 2 and the UE 1), and the UE 2 successfully obtains the application X. It may be further understood that the UE 2 may alternatively indicate, by using other explicit indication information, that the negotiation on the media information succeeds and the UE 2 successfully obtains the application X. This is not limited in this application.

Optionally, S619: The UE 1 sends an ACK message to the UE 2. Correspondingly, the UE 2 receives the ACK message from the UE 1.

For example, after receiving the SIP response message from the UE 2, the UE 1 determines, based on the information carried in the SIP response message, that the negotiation on the media information succeeds and the UE 2 successfully obtains the application X. For example, when the SIP response message carries the SDP Answer information, and the IP address and/or the port information that are/is carried in the SDP Answer information and that are/is used by the UE 2 to interconnect with the application data channel with the stream ID 1000 are/is not 0, the UE 1 determines that the negotiation on the media information succeeds and the UE 2 successfully obtains the application X. Alternatively, the UE 1 determines, by using the other explicit indication information carried in the SIP response message, that the negotiation on the media information succeeds and the UE 2 successfully obtains the application X.

In this case, the UE 1 returns the ACK message to the UE 2, to indicate that the message is successfully received.

It may be understood that, if the UE 1 negotiates the media information with the UE 2 through the UPDATE procedure (that is, the UE 1 sends the UPDATE request message in S610), the UE 1 may not perform S619.

S620: The application data channel with the stream ID 1000 is established between the UE 1 and the UE 2.

For example, the UE 1 and the UE 2 establish a DTLS association (DTLS Association) and an SCTP association (SCTP Association) based on the media information determined through the negotiation, and the stream ID 1000 is allocated to the applications X. Therefore, the application data channel with the stream ID 1000 needed by the applications X is established.

S621: The UE 1 reports, to the application X, that the ADC is successfully created.

S622: The UE 2 reports, to the application X, that the ADC is successfully created.

S623: The application X on the UE 1 and the application X on the UE 2 transmit the additional communication information through the application data channel with the stream ID 1000.

For example, after the UE 1 and the UE 2 respectively report to the respective applications X that the application data channel is successfully established, the applications X at both ends may transmit the additional communication information through the application data channel with the stream ID 1000, to implement the communication between the UE 1 and the UE 2 in addition to the voice call or the video call.

Case 2: The media negotiation fails and/or the UE 2 fails to obtain the application X.

S618: The UE 2 sends a SIP response message to the UE 1. Correspondingly, the UE 1 receives the SIP response message from the UE 2.

S624: The application data channel fails to be established, or the applications X cannot run.

In Case 2, if the UE 2 cannot establish the application data channel with the UE 1 due to some reasons (for example, the UE 2 does not support the media information provided in the SDP Offer information), or the UE 2 fails to obtain the application X (for example, the UE 2 receives an error response from the DCS 1 in S616), the UE 2 may refuse to establish the application data channel with the UE 1.

For example, in a possible implementation, the UE 2 sends the SIP response message to the UE 1 in response to the re-INVITE request message, but the SDP Answer in the SIP response message does not carry the media information used by the UE 2 to interconnect with the application data channel with the stream ID 1000, or the 200 OK response message carries the SDP Answer information, but the UE 1 sets, to 0, the IP address and/or the port information that are/is in the SDP Answer and that are/is used by the UE 2 to interconnect with the application data channel with the stream ID 1000. Alternatively, the UE 2 may alternatively include, in the SIP response message, the explicit indication information indicating that the negotiation on the media information fails and/or the UE 2 fails to obtain the application X.

Correspondingly, after receiving the SIP response message from the UE 2, when finding that the SIP response message does not carry the media information that is in the SDP Answer and that is used by the UE 2 to interconnect with the application data channel with the stream ID 1000, or the IP address and/or the port information that are/is in the carried SDP Answer information and that are/is used by the UE 2 to interconnect with the application data channel with the stream ID 1000 are/is 0, or the SIP response message carries the other explicit indication information indicating that the negotiation on the media information fails, or the UE 2 fails to obtain the application X, the UE 1 determines that the application data channel fails to be established. In this case, the applications X cannot run normally, that is, the UE 1 and the UE 2 cannot perform communication in addition to the voice call or the video call by using the applications X.

In another possible implementation, the UE 2 sends an error response message to the UE 1. That is, in Case 2, the SIP response message sent by the UE 2 to the UE 1 is the error response message of a specific type according to a SIP protocol. The UE 1 determines, based on the error response message, that the application data channel fails to be established. In this case, the applications X cannot run normally, that is, the UE 1 and the UE 2 cannot perform communication in addition to the voice call or the video call by using the applications X.

It may be understood that, in a possible implementation, if the UE 2 fails to obtain the application X, the UE 2 may retry for one or more times after the first failure (that is, the UE 2 repeatedly performs steps S615 and S616). If the failure persists, the UE 2 rejects the establishment of the application data channel to the UE 1 (for example, sends the error response message).

It may be further understood that, in a possible implementation, after receiving the error response from the UE 2, the UE 1 may alternatively re-initiate the re-INVITE procedure (that is, re-initiate S610). If new re-INVITE procedures still fail for one or more times, the UE 1 determines that the application data channel fails to be established. This is not limited in this application.

Based on the foregoing solution, the UE (namely, the UE 1 and the UE 2) in the same IMS call service may perform communication in addition to the voice call or the video call by using the data channel applications (that is, the applications X in the method 600) that can communicate with each other, thereby improving user experience. In addition, the UE 1 reuses the re-INVITE procedure, and sends the information about the application X to the UE 2, thereby reducing signaling overheads.

It may be understood that the foregoing embodiment is described by using an example in which the UE 1 determines to start the application X, then initiates the re-INVITE procedure, and sends the information about the application X to the UE 2 through the re-INVITE procedure. However, this application is not limited thereto. In this embodiment of this application, the UE 2 may alternatively determine to start the application X, and the UE 2 then initiates the re-INVITE procedure, and sends the information about the application X to the UE 1 through the re-INVITE procedure. This is not limited in this application.

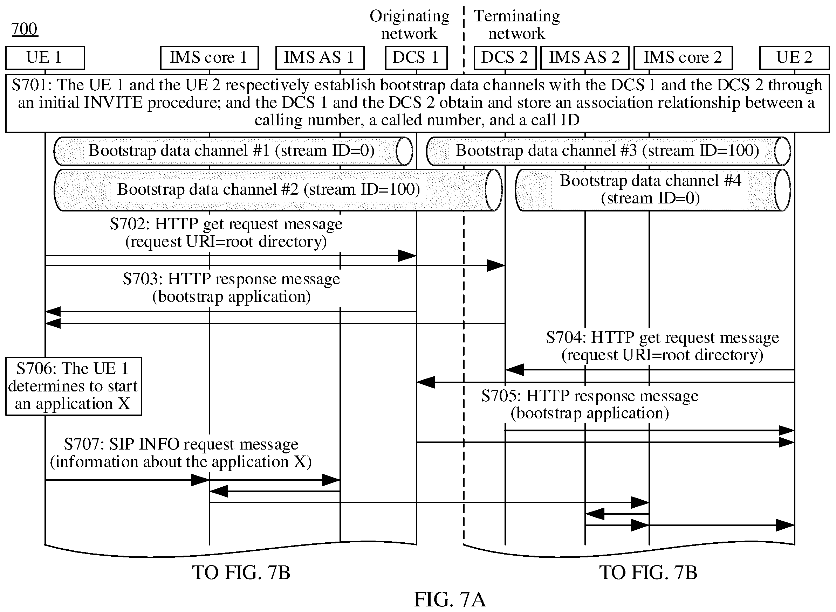

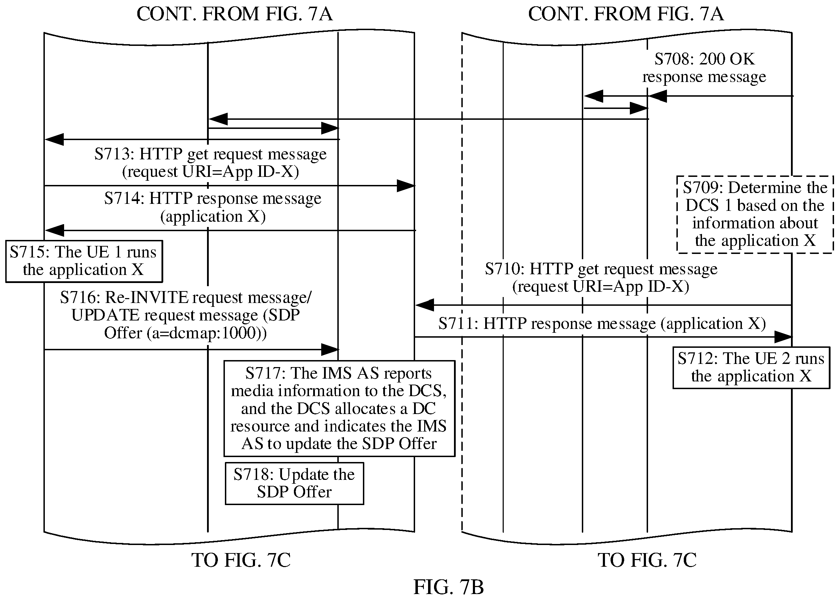

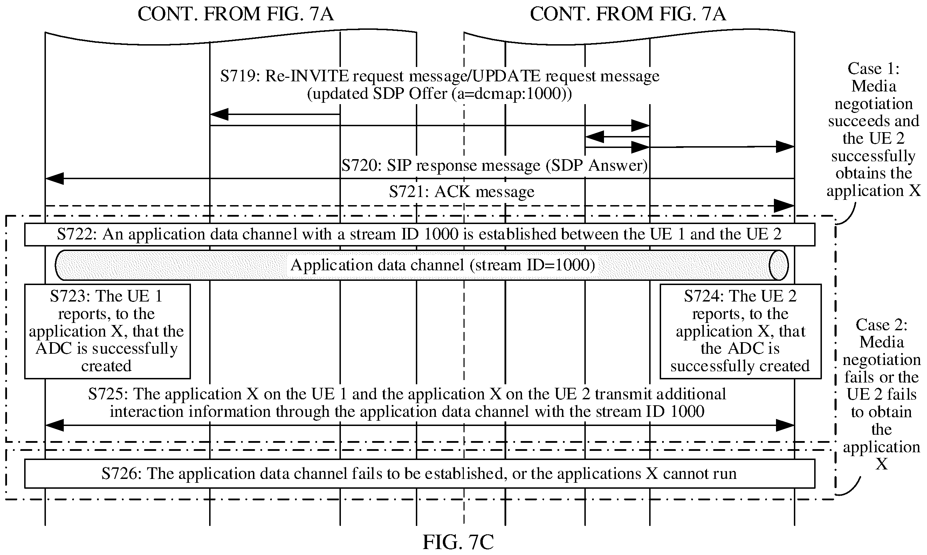

FIG. 7A, FIG. 7B, and FIG. 7C are an example flowchart of a method 700 according to an embodiment of this application. The method 700 may be another possible implementation of Solution A in the method 500. In the method 700, after determining to start an application X, UE 1 directly sends information about the application X to UE 2. Compared with the method 600, the method 700 can improve efficiency and reduce a delay. The UE 2 may obtain the application X based on the received information about the application X, so that the UE 1 and the UE 2 can perform communication in addition to a voice call or a video call by using the applications X.

The following describes the method 700 by using examples and with reference to each step in FIG. 7A, FIG. 7B, and FIG. 7C.

S701 to S706 are similar to S601 to S606 in the method 600. For brevity, details are not described herein again.

S707: The UE 1 sends a SIP INFO request message to the UE 2, where the SIP INFO request message includes the information about the application X. Correspondingly, the UE 2 receives the SIP INFO request message from the UE 1.

For example, when determining to start the application X, the UE 1 sends the SIP INFO request message to the UE 2 via an IMS core 1, an IMS AS 1, an IMS AS 2, and an IMS core 2, where the SIP INFO request message carries the information about the application X. The information about the application X includes the identifier (App ID-X) of the application X. Optionally, information used to download the application X is further included. For details, refer to descriptions of S610 in the method 600. Details are not described herein again.

S708: The UE 2 sends a 200 OK response message to the UE 1. Correspondingly, the UE 1 receives the 200 OK response message from the UE 2.

For example, after receiving the SIP INFO request message from the UE 1, the UE 2 sends a 200 OK response message to the UE 1 via the IMS core 2, the IMS AS 2, the IMS core 1, and the IMS AS 1, to indicate that the UE 2 successfully receives the SIP INFO request message from the UE 1.

Optionally, S614: The UE 2 determines, based on the information about the application X, to request to obtain the application X from the DCS 1.

For example, after receiving the SIP INFO request message from the UE 1, the UE 2 parses the SIP INFO request message to obtain the information about the application X. Then, the UE 2 determines, based on the information about the application X, to request the DCS 1 to obtain the application X. For details, refer to descriptions of S614 in the method 600. Details are not described herein again.

S710 to S712 are similar to S615 to S617 in the method 600. For brevity, details are not described herein again.

S713 to S726 are similar to S607 to S613 and S618 to S624 in the method 600, and a difference lies in that the SDP Offer information carried in the re-INVITE request message in S716 may not need to carry the information about the application X. For brevity, details are not described herein again.

Based on the foregoing solution, the UE (namely, the UE 1 and the UE 2) in the same IMS call service may implement communication in addition to the voice call or the video call by using the data channel applications (that is, the applications X in the method 700) that can communicate with each other, thereby improving user experience. In addition, after determining to start the application X, the UE 1 directly sends the information about the application X to the UE 2 by using the SIP request message, without waiting for a re-INVITE procedure to send the information about the application X to the UE 2. Therefore, the UE 2 may obtain the application X in advance, thereby improving efficiency, reducing a delay, and improving user experience.

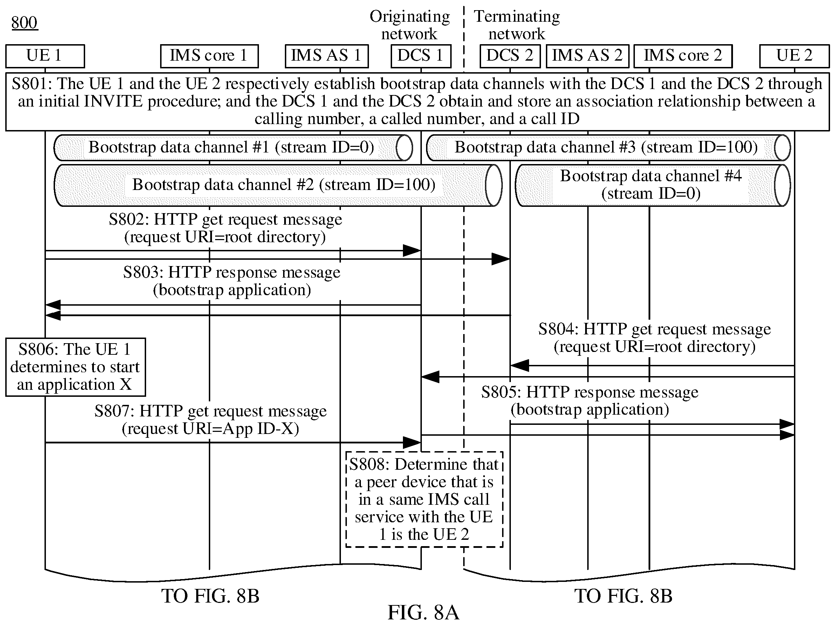

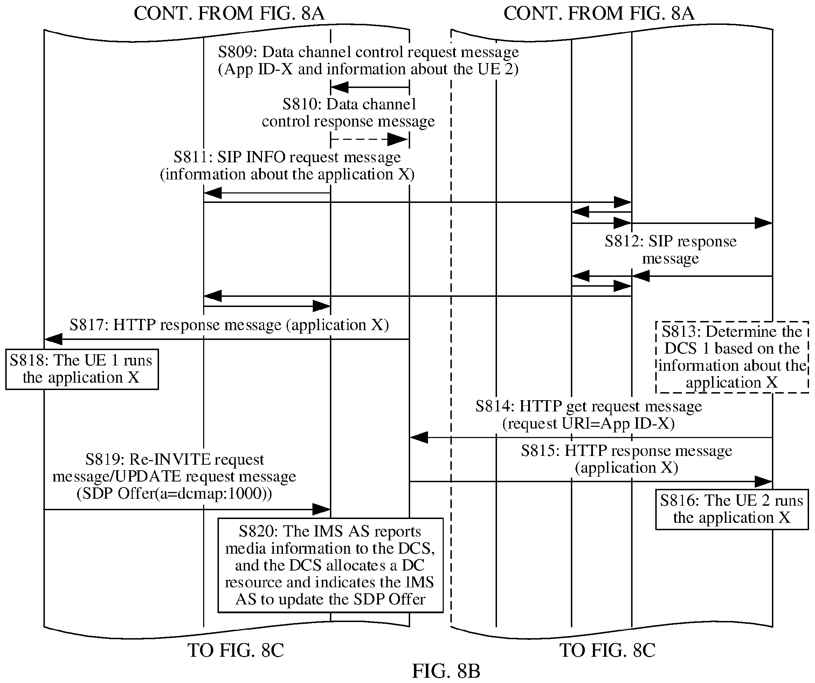

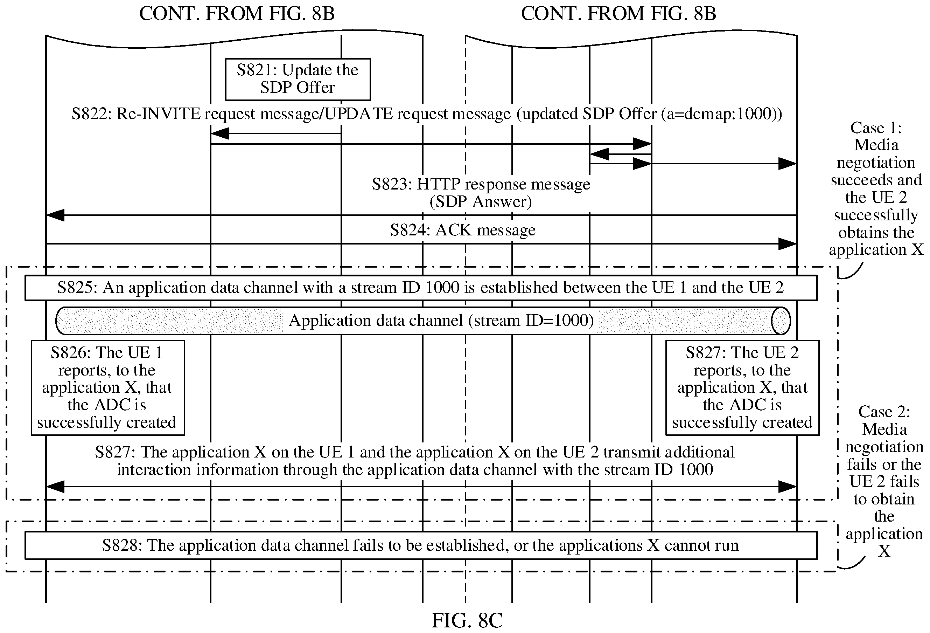

FIG. 8A, FIG. 8B, and FIG. 8C are an example flowchart of a method 800 according to an embodiment of this application. The method 800 may be a possible implementation of Solution B in the method 500. In the method 800, after determining to start an application X, UE 1 requests a DCS 1 to obtain the application X. The DCS 1 may send information about the application X to UE 2 via an IMS AS 1 based on the request of the UE 1, and the UE 2 may obtain the application X based on the received information about the application X. Therefore, the UE 1 and the UE 2 may perform communication in addition to a voice call or a video call by using the applications X.

The following describes the method 800 by using examples and with reference to each step in FIG. 8A, FIG. 8B, and FIG. 8C.

S801 to S807 are similar to S601 to S607 in the method 600. For brevity, details are not described herein again.

Optionally, S808: The DCS 1 determines that a peer device that is in the same IMS call service with the UE 1 is the UE 2.

For example, after receiving an HTTP get request message from the UE 1, the DCS 1 determines that the peer device that is in the same IMS call service with the UE 1 is the UE 2. For example, the DCS 1 obtains and stores a relationship between a calling number, a called number (that is, an identifier of the UE 1 and an identifier of the UE 2), and a call ID in an initial INVITE procedure (that is, S801) (for details, refer to related descriptions of S601 in the method 600), that is, the DCS 1 knows in advance that the UE 1 and the UE 2 are peer devices of an IMS call associated with the call ID. In this case, after receiving the HTTP get request message (the HTTP request message carries the call ID) through a bootstrap data channel with a stream ID 0, the DCS 1 determines that the HTTP request message is from the UE 1, and then determines, based on the call ID, the identifier of the UE 1, and the pre-stored association relationship, that the peer device that is in the same IMS call service with the UE 1 is the UE 2.

S809: The DCS 1 sends a data channel control request message to an IMS core 1. Correspondingly, the IMS core 1 receives the data channel control request message from the DCS 1.

For example, after receiving the HTTP get request message from the UE 1, the DCS 1 sends the data channel control request message to the IMS AS 1, where the data channel control request message includes an identifier (namely, an App ID-X) of the application X and information about the UE 2. The information about the UE 2 may be any information that can identify the UE 2, for example, a number (namely, a called number) of the UE 2. Optionally, the data channel control request may further include information used to download the application X. For the information used to download the application X, refer to descriptions of S601 in the method 600. Details are not described herein again. The data channel control request indicates the IMS AS 1 to send the information about the application X to the UE 2.

Optionally, S810: The IMS AS 1 sends a data channel control response message to the DCS 1, where the data channel control response message indicates that the IMS AS 1 successfully receives the data channel control request message from the DCS 1. Correspondingly, the DCS 1 receives the data channel control response message from the IMS AS 1.

S811: The IMS AS 1 sends a SIP INFO request message to the UE 2. Correspondingly, the UE 2 receives the SIP INFO request message from the IMS AS 1.

For example, the IMS AS 1 sends a SIP INFO request message to an IMS AS core 1 based on the data channel control request message, and includes the SIP INFO request message in the information about the application X. The information about the application X includes the identifier (App ID-X) of the application X. Optionally, information used to download the application X is further included. For details, refer to descriptions of S610 in the method 600. Details are not described herein again.

S812: The UE 2 sends a 200 OK response message to the IMS AS 1. Correspondingly, the IMS AS 1 receives the 200 OK response message from the UE 1.

For example, after receiving the SIP INFO request message from the IMS AS 1, the UE 2 sends the 200 OK response message to the IMS AS 1 via an IMS core 2, an IMS AS 2, and the IMS core 1, to indicate that the UE 2 successfully receives the SIP INFO request message from the IMS AS 1.

Optionally, S813: The UE 2 determines, based on the information about the application X, to request to obtain the application X from the DCS 1.

For example, after receiving the SIP INFO request message from the IMS AS 1, the UE 2 parses the SIP INFO request message to obtain the information about the application X. Then, the UE 2 determines, based on the information about the application X, to request a DCS 1 to obtain the application X. For details, refer to descriptions of S614 in the method 600. Details are not described herein again.

S814 to S816 are similar to S615 to S617 in the method 600. For brevity, details are not described herein again.

S817 and S818 are similar to S608 and S609 in the method 600. For brevity, details are not described herein again. It may be understood that a sequence of performing S808 and S809, and S817 by the IMS AS 1 is not limited in this application.

S819 to S828 are similar to S610 to S613 and S618 to S624 in the method 600, and a difference lies in that the SDP Offer information carried in the re-INVITE request message in S819 may not need to carry the information about the application X. For brevity, details are not described herein again.

Based on the foregoing solution, the UE (namely, the UE 1 and the UE 2) in the same IMS call service may implement communication in addition to the voice call or the video call by using the data channel applications (that is, the applications X in the method 800) that can communicate with each other, thereby improving user experience.

It may be further understood that the foregoing embodiments (the method 600 to the method 800) are described by using the example in which the UE 1 and the UE 2 are the devices for performing the IMS call. However, embodiments of this application are not limited thereto. In other words, embodiments of this application are further applicable to a scenario in which three or more devices perform an IMS call. For example, if the UE 1, the UE 2, and UE 3 are three devices that perform the IMS call, peer devices that are in a same IMS call service with the UE 1 are the UE 2 and the UE 3. In this case, when the UE 1 determines to start an application X, information about the application X may be provided to the UE 3 by using any one of the methods provided in the foregoing embodiments, that is, the UE 3 may perform any one of the methods performed by the UE 2 in the foregoing embodiments. Details are not described herein again.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

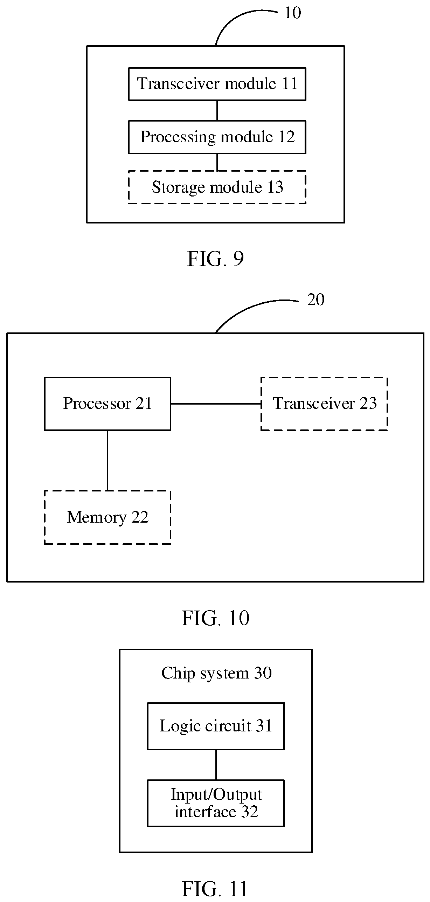

FIG. 9 is a block diagram of a communication apparatus 10 according to an embodiment of this application. The apparatus 10 includes a transceiver module 11 and/or a processing module 12. The transceiver module 11 may implement a corresponding communication function, and the processing module 12 is configured to perform data processing; or the transceiver module 11 is configured to perform receiving and sending-related operations, and the processing module 12 is configured to perform other operations other than the receiving and sending operations. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of the device or the network element in the foregoing method embodiments.

In a first design, the apparatus 10 may correspond to the first terminal device (for example, the first terminal device in FIG. 5 or the UE 1 in FIG. 6A, FIG. 6B, and FIG. 6C to FIG. 8A, FIG. 8B, and FIG. 8C) in the foregoing method embodiments, or may be a component (for example, a chip) of the first terminal device.

The apparatus 10 may implement steps or procedures performed by the first terminal device in the foregoing method embodiments. The transceiver module 11 may be configured to perform receiving and sending-related operations of the first terminal device in the foregoing method embodiments. The processing module 12 may be configured to perform processing-related operations of the first terminal device in the foregoing method embodiments.

In a possible implementation, the apparatus 10 may implement steps or procedures performed by the first terminal device in the method 500 or the UE 1 in the method 600 in the foregoing method embodiments. For example, the processing module 12 is configured to determine to start a data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device. The transceiver module 11 is configured to send information about the data channel application to the second terminal device, where the information about the data channel application includes an identifier of the data channel application.

In a second design, the apparatus 10 may correspond to the second terminal device (for example, the second terminal device in FIG. 5 or the UE 2 in FIG. 6A, FIG. 6B, and FIG. 6C to FIG. 8A, FIG. 8B, and FIG. 8C) in the foregoing method embodiments, or may be a component (for example, a chip) of the second terminal device.

The apparatus 10 may implement steps or procedures performed by the second terminal device in the foregoing method embodiments. The transceiver module 11 may be configured to perform receiving and sending-related operations of the second terminal device in the foregoing method embodiments. The processing module 12 may be configured to perform processing-related operations of the second terminal device in the foregoing method embodiments.

In a possible implementation, the apparatus 10 may implement steps or procedures performed by the second terminal device in the method 500 or the UE 2 in the method 600 to the method 800 in the foregoing method embodiments. For example, the transceiver module 11 is configured to receive information about a data channel application, where the information about the data channel application includes an identifier of the data channel application, the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device. The processing module 12 is configured to send a request message to a data channel server based on the information about the data channel application, where the request message includes the identifier of the data channel application, and the request message is for requesting to obtain the data channel application.

In a third design, the apparatus 10 may correspond to the application server (for example, the application server in FIG. 5 or the IMS AS 1 in FIG. 6A, FIG. 6B, and FIG. 6C to FIG. 8A, FIG. 8B, and FIG. 8C) in the foregoing method embodiments, or may be a component (for example, a chip) of the application server.

The apparatus 10 may implement steps or procedures performed by the application server in the foregoing method embodiments. The transceiver module 11 may be configured to perform receiving and sending-related operations of the application server in the foregoing method embodiments. The processing module 12 may be configured to perform processing-related operations of the application server in the foregoing method embodiments.

In a possible implementation, the apparatus 10 may implement steps or procedures performed by the application server in the method 500 or the application server in the method 800 in the foregoing method embodiments. For example, the transceiver module 11 is configured to receive an identifier of a data channel application and an identifier of a second terminal device that are from a data channel server, where the data channel application is used to transmit additional communication information through a data channel between a first terminal device and the second terminal device, the first terminal device and the second terminal device are in a same internet protocol multimedia subsystem IMS call service, and the additional communication information is used to perform communication in addition to a voice call or a video call between the first terminal device and the second terminal device. The processing module 12 is configured to send information about the data channel application to the second terminal device based on the identifier of the second terminal device, where the information about the data channel application includes the identifier of the data channel application.

In a fourth design, the apparatus 10 may correspond to the data channel server (for example, the data channel server in FIG. 5 or the DCS 1 in FIG. 6A, FIG. 6B, and FIG. 6C to FIG. 8A, FIG. 8B, and FIG. 8C) in the foregoing method embodiment, or may be a component (for example, a chip) of the data channel server.

The apparatus 10 may implement steps or procedures performed by the data channel server in the foregoing method embodiments. The transceiver module 11 may be configured to perform receiving and sending-related operations of the data channel server in the foregoing method embodiments. The processing module 12 may be configured to perform processing-related operations of the data channel server in the foregoing method embodiments.

In a possible implementation, the apparatus 10 may implement steps or procedures performed by the data channel server in the method 500 or the data channel server in the method 800 in the foregoing method embodiments. For example, the transceiver module 11 is configured to receive: a request message from a first terminal device, where the request message includes an identifier of a data channel application, the request message is for requesting to obtain the data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device; and send the identifier of the data channel application and an identifier of the second terminal device to an application server.

It should be understood that a specific process in which the modules perform the foregoing corresponding steps is described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or other suitable components that support the described functions. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in the foregoing solutions has a function of implementing corresponding steps performed by the device (for example, the first terminal device, the second terminal device, the application server, or the data channel server) in the foregoing methods. The functions may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform receiving and sending operations and processing-related operations in the method embodiments.

In addition, the transceiver module 11 may alternatively be a transceiver circuit (for example, may include a receiver circuit and a transmitter circuit), and the processing module may be a processing circuit.

FIG. 10 is a diagram of another communication apparatus 20 according to an embodiment of this application. The apparatus 20 includes a processor 21. The processor 21 is configured to: execute a computer program or instructions stored in the memory 22, or read data/signaling stored in the memory 22, to perform the methods in the foregoing method embodiments. Optionally, there are one or more processors 21.

Optionally, as shown in FIG. 10, the apparatus 20 further includes the memory 22. The memory 22 is configured to store the computer program or the instructions and/or the data. The memory 22 and the processor 21 may be integrated together, or may be disposed separately. Optionally, there are one or more memories 22.

Optionally, as shown in FIG. 10, the apparatus 20 further includes a transceiver 23. The transceiver 23 is configured to: receive and/or send a signal. For example, the processor 21 is configured to control the transceiver 23 to receive and/or send the signal.

In a solution, the apparatus 20 is configured to implement operations performed by the first terminal device in the foregoing method embodiments.

In another solution, the apparatus 20 is configured to implement operations performed by the second terminal device in the foregoing method embodiments.

In still another solution, the apparatus 20 is configured to implement operations performed by the application server in the foregoing method embodiments.

In yet another solution, the apparatus 20 is configured to implement operations performed by the data channel server in the foregoing method embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another appropriate type.

FIG. 11 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by a network functions virtualization orchestrator in the foregoing method embodiments.

For example, the logic circuit 31 is configured to implement a processing-related operation performed by the first terminal device in the foregoing method embodiments, for example, a processing-related operation performed by the first terminal device in the embodiment shown in FIG. 5 or the UE 1 in FIG. 6A, FIG. 6B, and FIG. 6C to FIG. 8A, FIG. 8B, and FIG. 8C. The input/output interface 32 is configured to implement sending and/or receiving-related operations performed by the first terminal device in the foregoing method embodiments, for example, sending and/or receiving-related operations performed by the first terminal device in the embodiment shown in FIG. 5 or the UE 1 in FIG. 6A, FIG. 6B, and FIG. 6C to FIG. 8A, FIG. 8B, and FIG. 8C.

In another solution, the chip system 30 is configured to implement operations performed by the second terminal device in the foregoing method embodiments, for example, processing-related operations performed by the second terminal device in the embodiment shown in FIG. 5 or the UE 1 in FIG. 6A, FIG. 6B, and FIG. 6C to FIG. 8A, FIG. 8B, and FIG. 8C. The input/output interface 32 is configured to implement sending and/or receiving-related operations performed by the second terminal device in the foregoing method embodiments, for example, sending and/or receiving-related operations performed by the second terminal device in the embodiment shown in FIG. 5 or the UE 2 in FIG. 6A, FIG. 6B, and FIG. 6C to FIG. 8A, FIG. 8B, and FIG. 8C.

In still another solution, the chip system 30 is configured to implement operations performed by the application server in the foregoing method embodiments, for example, processing-related operations performed by the application server in the embodiment shown in FIG. 5 or the IMS AS 1 in FIG. 6A, FIG. 6B, and FIG. 6C to FIG. 8A, FIG. 8B, and FIG. 8C. The input/output interface 32 is configured to implement sending and/or receiving-related operations performed by the application server in the foregoing method embodiments, for example, sending and/or receiving-related operations performed by the application server in the embodiment shown in FIG. 5 or the IMS AS 1 in FIG. 6A, FIG. 6B, and FIG. 6C to FIG. 8A, FIG. 8B, and FIG. 8C.

In yet another solution, the chip system 30 is configured to implement operations performed by the data channel server in the foregoing method embodiments, for example, processing-related operations performed by the data channel server in the embodiment shown in FIG. 5 or the DCS 1 in FIG. 6A, FIG. 6B, and FIG. 6C to FIG. 8A, FIG. 8B, and FIG. 8C. The input/output interface 32 is configured to implement sending and/or receiving-related operations performed by the data channel server in the foregoing method embodiments, for example, sending and/or receiving-related operations performed by the data channel server in the embodiment shown in FIG. 5 or the DCS 1 in FIG. 6A, FIG. 6B, and FIG. 6C to FIG. 8A, FIG. 8B, and FIG. 8C.

An embodiment of this application further provides a computer-readable storage medium. The computer-readable storage medium stores computer instructions for implementing a method performed by the device in the foregoing method embodiments.

An embodiment of this application further provides a computer program product, including instructions. When the instructions are executed by a computer, a method performed by the device in the foregoing method embodiments is implemented.

An embodiment of this application further provides a communication system, including the foregoing application server and data channel server. Optionally, the foregoing first terminal device and second terminal device are further included.

For explanations and beneficial effect of related content of any one of the apparatuses provided above, refer to the corresponding method embodiments provided above. Details are not described herein again.

In the several embodiments provided in this application, it should be understood that the disclosed apparatus and method may be implemented in other manners. For example, the apparatus embodiments described above are merely examples. For example, division into the units is merely logical function division, and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first terminal device, application information, wherein the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device; and
sending, by the first terminal device, the application information to the second terminal device, wherein the application information comprises an identifier of the data channel application.

2. The method according to claim 1, wherein the application information further comprises information used to download the data channel application.

3. The method according to claim 2, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

4. The method according to any one of claims 1 to 3, wherein the sending, by the first terminal device, the application information to the second terminal device comprises:
sending, by the first terminal device, a session initiation protocol re-invite SIP re-INVITE request message to the second terminal device by using an application server, wherein the SIP re-INVITE request message comprises the application information; or
sending, by the first terminal device, a session initiation protocol update SIP UPDATE request message to the second terminal device by using an application server, wherein the SIP UPDATE request message comprises the application information.

5. The method according to any one of claims 1 to 3, wherein the sending, by the first terminal device, the application information to the second terminal device comprises:
sending, by the first terminal device, a session initiation protocol information SIP INFO request message to the second terminal device, wherein the SIP INFO request message comprises the application information.

6. The method according to any one of claims 1 to 5, wherein the method further comprises:
determining, by the first terminal device, to start the data channel application.

7. The method according to claim 6, wherein the determining, by the first terminal device, to start the data channel application comprises:
detecting, by the first terminal device, that a user selects the data channel application.

8. The method according to any one of claims 1 to 7, wherein the method further comprises:
receiving, by the first terminal device, indication information from the second terminal device, wherein the indication information indicates that the second terminal device successfully obtains the data channel application; and
establishing, by the first terminal device, the data channel between the first terminal device and the second terminal device based on the indication information.

9. A communication method, comprising:
receiving, by a second terminal device, application information, wherein the application information comprises an identifier of the data channel application, the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device; and
starting, by the second terminal device, the data channel application based on the application information.

10. The method according to claim 9, wherein the application information further comprises information used to download the data channel application.

11. The method according to claim 10, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

12. The method according to claim 10 or 11, wherein the method further comprises:
determining, by the second terminal device, the data channel server based on the information used to download the data channel application; and
requesting, by the second terminal device, to obtain the data channel application from the data channel server.

13. The method according to any one of claims 9 to 12, wherein the receiving, by a second terminal device, application information comprises:
receiving, by the second terminal device, a SIP re-INVITE request message from the first terminal device, wherein the SIP re-INVITE request message comprises the application information;
receiving, by the second terminal device, a SIP UPDATE request message from the first terminal device, wherein the UPDATE request message comprises the application information;
receiving, by the second terminal device, a SIP INFO request message from the first terminal device, wherein the SIP INFO request message comprises the application information; or
receiving, by the second terminal device, a SIP INFO request message from the application server, wherein the SIP INFO request message comprises the application information.

14. The method according to any one of claims 9 to 13, wherein the method further comprises:
receiving, by the second terminal device, the data channel application from the data channel server; and
sending, by the second terminal device, indication information to the first terminal device, wherein the indication information indicates that the second terminal device successfully obtains the data channel application.

15. A communication method, comprising:
receiving, by an application server, an identifier of a data channel application and an identifier of a second terminal device that are from a data channel server, wherein the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device; and
sending, by the application server, application information to the second terminal device based on the identifier of the second terminal device, wherein the application information comprises the identifier of the data channel application.

16. The method according to claim 15, wherein the application information further comprises information used to download the data channel application.

17. The method according to claim 16, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

18. The method according to any one of claims 15 to 17, wherein the sending, by the application server, application information to the second terminal device based on the identifier of the second terminal device comprises:
sending, by the application server, a session initiation protocol information SIP INFO request message to the second terminal device based on the identifier of the second terminal device, wherein the SIP INFO request message comprises the application information.

19. A communication method, comprising:
receiving, by a data channel server, a request message from a first terminal device, wherein the request message comprises an identifier of a data channel application, the request message is for requesting to obtain the data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device; and
sending, by the data channel server, the identifier of the data channel application and an identifier of the second terminal device to an application server.

20. The method according to claim 19, wherein before the sending, by the data channel server, the identifier of the data channel application and an identifier of the second terminal device to an application server, the method further comprises:
determining, by the data channel server, that a peer device that is in the same IMS call service with the first terminal device is the second terminal device.

21. A communication method, comprising:
receiving, by a data channel server, the request message from a first terminal device, wherein the request message comprises an identifier of a data channel application, the request message is for requesting to obtain the data channel application, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device;
sending, by the data channel server, the identifier of the data channel application and an identifier of the second terminal device to an application server;
receiving, by the application server, the identifier of the data channel application and the identifier of the second terminal device that are from the data channel server; and
sending, by the application server, application information to the second terminal device based on the identifier of the second terminal device, wherein the application information comprises the identifier of the data channel application.

22. The method according to claim 21, wherein the method further comprises:
receiving, by the second terminal device, the application information from the application server; and
starting, by the second terminal device, the data channel application based on the application information.

23. The method according to claim 21 or 22, wherein information about the data channel application further comprises information used to download the data channel application.

24. The method according to claim 23, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

25. The method according to any one of claims 21 to 24, wherein the method further comprises:
determining, by the data channel server, that a peer device that is in the same IMS call service with the first terminal device is the second terminal device.

26. A communication method, comprising:
receiving, by a second terminal device, application information, wherein the application information comprises an identifier of a data channel application, the data channel application is used to transmit additional communication information through a data channel between a first terminal device and the second terminal device that are in a same internet protocol multimedia subsystem IMS call service, and the additional communication information is used to perform communication in addition to a voice call or a video call between the first terminal device and the second terminal device; and
starting, by the second terminal device, the data channel application based on the application information.

27. The method according to claim 26, wherein the application information further comprises information used to download the data channel application.

28. The method according to claim 27, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

29. The method according to claim 27 or 28, wherein the method further comprises:
determining, by the second terminal device, the data channel server based on the information used to download the data channel application; and
requesting, by the second terminal device, to obtain the data channel application from the data channel server.

30. The method according to claim 29, wherein the method further comprises:
sending, by the data channel server, the data channel application to the second terminal device;
receiving, by the second terminal device, the data channel application from the data channel server; and
sending, by the second terminal device, indication information to the first terminal device, wherein the indication information indicates that the second terminal device successfully obtains the data channel application.

31. A communication method, comprising:
obtaining, by a first terminal device, application information, wherein the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device;
sending, by the first terminal device, the application information to the second terminal device, wherein the application information comprises an identifier of the data channel application;
receiving, by the second terminal device, the application information; and
starting, by the second terminal device, the data channel application based on the application information.

32. The method according to claim 31, wherein the application information further comprises information used to download the data channel application.

33. The method according to claim 32, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

34. The method according to any one of claims 31 to 33, wherein the sending, by the first terminal device, the application information to the second terminal device comprises:
sending, by the first terminal device, a session initiation protocol re-invite SIP re-INVITE request message to the second terminal device by using an application server, wherein the SIP re-INVITE request message comprises the application information; or
sending, by the first terminal device, a session initiation protocol update SIP UPDATE request message to the second terminal device by using an application server, wherein the SIP UPDATE request message comprises the application information.

35. The method according to any one of claims 31 to 33, wherein the sending, by the first terminal device, the application information to the second terminal device comprises:
sending, by the first terminal device, a session initiation protocol information SIP INFO request message to the second terminal device, wherein the SIP INFO request message comprises the application information.

36. The method according to any one of claims 31 to 35, wherein the method further comprises:
determining, by the first terminal device, to start the data channel application.

37. The method according to claim 36, wherein the determining, by the first terminal device, to start the data channel application comprises:
detecting, by the first terminal device, that a user selects the data channel application.

38. The method according to any one of claims 31 to 37, wherein the method further comprises:
receiving, by the first terminal device, indication information from the second terminal device, wherein the indication information indicates that the second terminal device successfully obtains the data channel application; and
establishing, by the first terminal device, the data channel between the first terminal device and the second terminal device based on the indication information.

39. The method according to any one of claims 31 to 38, wherein the receiving, by the second terminal device, the application information comprises:
receiving, by the second terminal device, a SIP re-INVITE request message from the first terminal device, wherein the SIP re-INVITE request message comprises the application information;
receiving, by the second terminal device, a SIP UPDATE request message from the first terminal device, wherein the UPDATE request message comprises the application information;
receiving, by the second terminal device, a SIP INFO request message from the first terminal device, wherein the SIP INFO request message comprises the application information; or
receiving, by the second terminal device, a SIP INFO request message from the application server, wherein the SIP INFO request message comprises the application information.

40. The method according to any one of claims 31 to 39, wherein the method further comprises:
receiving, by the second terminal device, the data channel application from the data channel server; and
sending, by the second terminal device, indication information to the first terminal device, wherein the indication information indicates that the second terminal device successfully obtains the data channel application.

41. A communication method, comprising:
obtaining, by a first terminal device, application information, wherein the application information is information about a data channel application that is to be started or has been started, the data channel application is used to transmit additional communication information through a data channel between the first terminal device and a second terminal device that are in a same internet protocol multimedia subsystem IMS call service, and the additional communication information is used to perform communication in addition to a voice call or a video call between the first terminal device and the second terminal device;
receiving, by a data channel server, a request message from the first terminal device, wherein the request message comprises an identifier of the data channel application, and the request message is for requesting to obtain the data channel application;
sending, by the data channel server, the identifier of the data channel application and an identifier of the second terminal device to an application server;
receiving, by the application server, the identifier of the data channel application and the identifier of the second terminal device that are from the data channel server;
sending, by the application server, the application information to the second terminal device based on the identifier of the second terminal device, wherein the application information comprises the identifier of the data channel application;
receiving, by the second terminal device, the application information; and
starting, by the second terminal device, the data channel application based on the application information.

42. The method according to claim 41, wherein the application information further comprises information used to download the data channel application.

43. The method according to claim 42, wherein the information used to download the data channel application comprises one or more of the following:
information indicating a network to which the data channel application belongs;
a stream identifier that is of a bootstrap data channel and that is used by the first terminal device to download the data channel application; or
a stream identifier that is of a bootstrap data channel and that is used by the second terminal device to download the data channel application.

44. The method according to any one of claims 41 to 43, wherein the sending, by the application server, the application information to the second terminal device based on the identifier of the second terminal device comprises:
sending, by the application server, a session initiation protocol information SIP INFO request message to the second terminal device based on the identifier of the second terminal device, wherein the SIP INFO request message comprises the application information.

45. The method according to claim 41, wherein before the sending, by the data channel server, the identifier of the data channel application and an identifier of the second terminal device to an application server, the method further comprises:
determining, by the data channel server, that a peer device that is in the same IMS call service with the first terminal device is the second terminal device.

46. The method according to any one of claims 41 to 45, wherein the method further comprises:
determining, by the second terminal device, the data channel server based on the information used to download the data channel application; and
requesting, by the second terminal device, to obtain the data channel application from the data channel server.

47. The method according to claim 46, wherein the method further comprises:
sending, by the data channel server, the data channel application to the second terminal device;
receiving, by the second terminal device, the data channel application from the data channel server; and
sending, by the second terminal device, indication information to the first terminal device, wherein the indication information indicates that the second terminal device successfully obtains the data channel application.

48. A communication apparatus, wherein the apparatus comprises a module configured to perform the method according to any one of claims 1 to 8, a module configured to perform the method according to any one of claims 9 to 14, a module configured to perform the method according to any one of claims 15 to 18, or a module configured to perform the method according to claim 19 or 20.

49. A communication apparatus, comprising:
a processor, configured to execute a computer program stored in the memory, to enable the apparatus to perform the method according to any one of claims 1 to 8, to enable the apparatus to perform the method according to any one of claims 9 to 14, to enable the apparatus to perform the method according to any one of claims 15 to 18, or to enable the apparatus to perform the method according to claim 19 or 20.

50. A computer program product, wherein the computer program product comprises instructions used to perform the method according to any one of claims 1 to 8, the computer program product comprises instructions used to perform the method according to any one of claims 9 to 14, the computer program product comprises instructions used to perform the method according to any one of claims 15 to 18, or the computer program product comprises instructions used to perform the method according to claim 19 or 20.

51. A computer-readable storage medium, wherein the computer-readable storage medium stores a computer program; and when the computer program is run on a computer, the computer is enabled to perform the method according to any one of claims 1 to 8, the computer is enabled to perform the method according to any one of claims 9 to 14, the computer is enabled to perform the method according to any one of claims 15 to 18, or the computer is enabled to perform the method according to claim 19 or 20.

52. A communication system, comprising an application server and a data channel server, wherein
the application server is configured to perform the method according to any one of claims 15 to 18, and the data channel server is configured to perform the method according to claim 19 or 20.

53. The communication system according to claim 52, wherein the communication system further comprises a second terminal device; and
the second terminal device is configured to perform the method according to any one of claims 9 to 14.

54. A communication system, comprising a first terminal device and a second terminal device, wherein
the first terminal device is configured to perform the method according to any one of claims 1 to 8, and the second terminal device is configured to perform the method according to any one of claims 9 to 14.

55. A chip, wherein the chip comprises a processor and a communication interface, the processor reads, through the communication interface, instructions stored in a memory, and when the instructions are executed, the processor is configured to perform the method according to any one of claims 1 to 8, is configured to perform the method according to any one of claims 9 to 14, is configured to perform the method according to any one of claims 15 to 18, or is configured to perform the method according to claim 19 or 20.
